# EUROPEAN PATENT APPLICATION

(11) **EP 3 933 438 A2**
(43) Date of publication of application: **05.01.2022**
(21) Application number: 21182718.3
(22) Date of filing: 30.06.2021
(51) Int. Cl.: G01S 13/931, G01S 13/86, G01S 13/46

(54) **SYSTEM AND METHOD PROVIDING TRUCK-MOUNTED SENSORS TO DETECT TRAILER FOLLOWING VEHICLES AND TRAILER CONDITIONS**

(30) Priority: 30.06.2020 US 202063046147 P
(71) Applicant: TuSimple, Inc., San Diego, CA 92122 (US)
(72) Inventor: PRICE, Charles A., San Diego, CA 92122 (US); HAN, Xiaoling, San Diego, CA 92122 (US); GE, Lingting, San Diego, CA 92122 (US); HUANG, Zehua, San Diego, CA 92122 (US); WANG, Panqu, San Diego, CA 92122 (US); ZHANG, Chiyu, San Diego, CA 92122 (US); RODRIGUEZ, Joshua Miguel, San Diego, CA 92122 (US); XIN, Junjun, San Diego, CA 92122 (US)
(74) Representative: Murgitroyd & Company

(57) **Abstract**

A system and method providing truck-mounted sensors to detect trailer following vehicles and trailer conditions are disclosed. A system of an example embodiment comprises: a vehicle control subsystem installed in an autonomous truck, the vehicle control subsystem comprising a data processor; and a truck-mounted sensor subsystem installed on a portion of a tractor of the autonomous truck to which a trailer is attachable, the truck-mounted sensor subsystem being coupled to the vehicle control subsystem via a data connection, wherein the truck-mounted sensor subsystem is configured to emit electromagnetic waves propagating in a space under the trailer, to generate object data representing objects detected by receiving a reflection of the electromagnetic waves, and to transfer the object data to the vehicle control subsystem.

## Description

### TECHNICAL FIELD

This patent document pertains generally to tools (systems, apparatuses, methodologies, computer program products, etc.) for autonomous driving systems, object detection, vehicle control systems, radar systems, camera systems, thermal detection systems, and ultrasonic detection systems, and more particularly, but not by way of limitation, to a system and method providing truck-mounted sensors to detect trailer following vehicles and trailer conditions.

### BACKGROUND

During the process of operating a motor vehicle, it is necessary for the operator to obtain information concerning the proximity of various dangerous objects and their relative velocities for the operator to make prudent driving decisions, such as whether or not there is enough time to change lanes or apply the brakes. This information should be obtained from the area that completely surrounds the vehicle. In order to gather this information, the operator is frequently required to physically turn his or her head to check for occupancy of a blind spot, for example. In taking such an action, the attention of the driver is invariably momentarily diverted from control of the vehicle.

For an automobile, the blind spots typically occur on either side of the vehicle starting approximately at the position of the driver and extending backwards sometimes beyond the rear of the vehicle. The locations of these blind spots depend heavily on the adjustment of the angle of the rear view mirror. The problem is more complicated for trucks, tractors, and construction equipment that not only can have much larger blind spots along the sides of the vehicle, but also can have a serious blind spot directly behind the tractor/truck or the trailer being towed by a tractor/truck. This blind spot is particularly serious with tractor/trucks towing trailers in traffic or urban areas where small vehicles, motorcycles, pedestrians, bicycles etc. in this blind spot can be completely hidden from the view of the driver. It is important for the driver of a tractor/truck or an autonomous control system for a tractor/truck to be able to detect objects in the blind spot behind the trailer, such as following vehicles. If this object or following vehicle detection is possible, then a rear collision warning function or a better braking strategy can be implemented. However, conventional systems do not provide a solution for detecting following vehicles behind a trailer being towed by a tractor/truck. Typically, it is not possible or feasible to install a sensor on the back of the trailer for this detection purpose; because, tractor/trucks can be used for towing a variety of different types of trailers from different owners/customers and the trucker typically does not have access or authority to modify the trailer.

Additionally, the condition of the trailer and the condition of the wheels or tires at the rear end of the trailer are important to monitor. Dangerous conditions can be encountered if any one of the trailer tires experience a blow-out, re-cap shredding, or a low pressure condition. Although tire-mounted sensor technologies exist, these tire-mounted sensors may not be practical for use with tractor/trucks towing a variety of different types of trailers for different trailer owners. Moreover, these tire-mounted sensors are not used with autonomous trucks. Currently, autonomous trucks cannot detect a dangerous condition occurring with the trailer or the wheels or tires of a trailer being towed by the autonomous truck.

### SUMMARY

A system and method providing truck-mounted sensors to detect trailer following vehicles and trailer conditions are disclosed herein. A system of an example embodiment comprises: a vehicle control subsystem installed in an autonomous truck, the vehicle control subsystem comprising a data processor; and a truck-mounted radar subsystem installed on a rear, side, front, or top portion of a tractor of the autonomous truck to which a trailer is attachable, the truck-mounted radar subsystem being coupled to the vehicle control subsystem via a data connection, wherein the truck-mounted radar subsystem is configured to emit electromagnetic waves propagating in a space under the trailer, to generate object data representing objects detected by receiving a reflection of the electromagnetic waves, and to transfer the object data to the vehicle control subsystem.

Additionally, a system and method providing truck-mounted sensors to detect a trailer condition or type are disclosed herein. A system of an example embodiment comprises: a vehicle control subsystem installed in an autonomous truck, the vehicle control subsystem comprising a data processor; and a truck-mounted sensor subsystem installed on a portion of a tractor of the autonomous truck to which a trailer or multiple trailers is attachable, the truck-mounted sensor subsystem being coupled to the vehicle control subsystem via a data connection, the truck-mounted sensor subsystem is configured to capture signals to detect a condition of the trailer or multiple trailers, the truck-mounted sensor subsystem further configured to generate sensor data representing the condition of the trailer or multiple trailers as detected by the captured signals and to transfer the sensor data to the vehicle control subsystem. Details of the various example embodiments are described below and illustrated in the figures of the present application.

### BRIEF DESCRIPTION OF THE DRAWINGS

The various embodiments are illustrated by way of example, and not by way of limitation, in the figures of the accompanying drawings in which:
Fig. 1 illustrates a side view of a tractor/truck towing an attached trailer with a following vehicle in the blind spot behind the trailer, the tractor/truck being configured with a rear-facing radar subsystem according to an example embodiment;
Fig. 2 illustrates a rear perspective view of a tractor/truck configured with a rear-facing radar subsystem according to an example embodiment;
Fig. 3 illustrates a side view of a tractor/truck towing an attached trailer, the tractor/truck being configured with a rear-facing radar subsystem according to an example embodiment, wherein the bottom surface of the trailer and the ground below the trailer create a wave guide through which the radar electromagnetic waves propagate and travel;
Fig. 4 illustrates a bottom view of a tractor/truck towing an attached trailer with a following vehicle in the blind spot behind the trailer, the tractor/truck being configured with a rear-facing radar subsystem according to an example embodiment, wherein the bottom surface of the trailer and the ground below the trailer create a wave guide through which the radar electromagnetic waves propagate and travel to detect the following vehicle;
Fig. 5 is a process flow diagram illustrating an example embodiment of a method for providing a rear-facing radar subsystem to detect trailer following vehicles;
Fig. 6 illustrates a block diagram showing an example ecosystem in which an in-vehicle control system and a radar data processing module of an example embodiment can be implemented;
Fig. 7 is a process flow diagram illustrating an example embodiment of a method for using a rear-facing radar subsystem to detect trailer following vehicles and for using an in-vehicle control system to process the radar data and control the autonomous vehicle accordingly;
Fig. 8 illustrates another example embodiment showing a side view of a tractor/truck towing an attached trailer, the tractor/truck being configured with a rear-facing sensor subsystem to detect the condition of the trailer wheels;
Fig. 9 illustrates an example embodiment showing a bottom view of a tractor/truck towing an attached trailer, the tractor/truck being configured with a rear-facing sensor subsystem to detect the condition of the trailer wheels;
Fig. 10 is a process flow diagram illustrating an example embodiment of a method for using a rear-facing sensor subsystem to detect trailer conditions and for using a vehicle control subsystem to process the sensor data and control the autonomous vehicle accordingly;
Fig. 11 illustrates an example embodiment of a sensor subsystem that includes a single rear radar unit in data communication with a central computer;
Fig. 12 illustrates an example embodiment of a sensor subsystem that includes a rear radar unit, a rear left radar unit, a rear right radar unit, a rear right camera, and a rear left camera, each in data communication with a central computer;
Fig. 13 illustrates an example embodiment of a sensor subsystem that includes a rear radar unit, a rear left radar unit, a rear right radar unit, a rear right camera, a rear left camera, a rear right LIDAR unit, a rear left LIDAR unit, each in data communication with a central computer;
Fig. 14 illustrates an example embodiment of a camera subsystem integrated into a rack or mounting elements for a truck or tractor;
Fig. 15 illustrates an example embodiment of a LIDAR subsystem integrated into portions of a truck or tractor;
Fig. 16 illustrates an example embodiment of a sensor subsystem integrated into a rear mounting bracket of a truck or tractor;
Fig. 17 illustrates an example embodiment of a radar subsystem integrated into portions of a truck or tractor;
Fig. 18 is a process flow diagram illustrating an example embodiment of a method for using a rear-facing sensor subsystem to detect trailer conditions or trailer status and for using a vehicle control subsystem to process the sensor data and control the autonomous vehicle accordingly; and
Figs. 19 through 21 are process flow diagrams illustrating example embodiments of methods for fusing various forms of sensor data.

### DETAILED DESCRIPTION

In the following description, for purposes of explanation, numerous specific details are set forth in order to provide a thorough understanding of the various embodiments. It will be evident, however, to one of ordinary skill in the art that the various embodiments may be practiced without these specific details.

A system and method providing truck-mounted sensors to detect trailer following vehicles and trailer conditions are disclosed herein. Tractor/trailers, big rigs, or 18-wheel trucks are common on most roadways. These tractor/trailers usually include a truck or tractor removably attached to one or more trailers, which are typically used to haul freight. It is common for these big rig trucks to attach and haul a variety of different types of trailers owned or operated by a variety of different owners or customers. In most cases, the truck operator is not authorized or legally able to modify the trailer configuration or the trailer being hauled by the tractor/truck. As a result, it would not be authorized or feasible to attach a sensor to the back of a trailer to detect following vehicles. Thus, it is not feasible to attach a camera, a radar unit, or a LIDAR sensor to the back of a trailer for following vehicle detection.

The area underneath the trailer or multiple trailers and between the front and rear axles and sets of trailer wheels is usually free of obstructions. However, there is not typically an unobstructed line-of-sight view from the rear of the tractor/truck, underneath the trailer, and out of the rear of the trailer; because, the rear axles and rear set of trailer wheels and other trailer structures can obstruct a large portion of this view.

To overcome these challenges, the various embodiments described herein use a truck-mounted radar unit removably and adjustably installed at the rear end of the tractor/truck and close to the fifth wheel coupling. The truck-mounted radar solution of the various example embodiments disclosed herein emits electromagnetic waves rearward from the back of the tractor/truck and underneath the trailer or multiple trailers being towed by the tractor/truck. The area between the lower surface of the trailer or multiple trailers and the ground underneath the trailer(s) acts as a wave guide to enable the electromagnetic waves to propagate and travel from the rear of the tractor/truck to the rear end of the trailer or multiple trailers and beyond. Unlike cameras or LIDAR, the electromagnetic waves emitted by the truck-mounted radar subsystem do not require an unobstructed line-of-sight view. These electromagnetic waves can travel in the wave guide underneath the trailer or multiple trailers and reflect off objects (e.g., following vehicles or tailgaters) behind the trailer(s). The reflected electromagnetic waves can travel back through the wave guide underneath the trailer or multiple trailers and get received by the truck-mounted radar subsystem on the tractor/truck. As with standard radar devices, these reflected electromagnetic signals can be used to detect any vehicles following the trailer or multiple trailers within the blind zone behind the trailer(s).

The various example embodiments disclosed herein are electrically and mechanically isolated from the trailer(s). Thus, no hardware modification, no installation, and no other modification to the trailer is needed. Given the detection of following vehicles behind the trailer provided by the example embodiments, an autonomous vehicle control system in the tractor/truck can use the following vehicle detection information to implement, for an autonomously-controlled tractor/truck, a specific braking strategy, a lane change strategy, or other control strategy to avoid a collision with the following vehicle. As a result, the autonomous vehicle control system in the tractor/truck can be more comprehensive and sensitive to situations causing sudden braking and rear collisions. Thus, these situations can be avoided or mitigated.

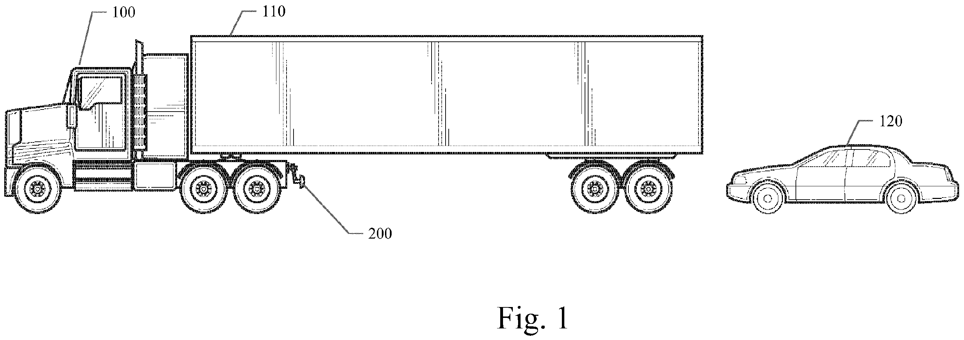

Fig. 1 illustrates a side view of a tractor/truck 100 towing an attached trailer 110 with a following vehicle 120 in the blind spot behind the trailer, the tractor/truck 100 being configured with a rear-facing radar subsystem 200 according to an example embodiment. Although Fig. 1 shows a single trailer 110 being towed by tractor/truck 100, it will be understood by those of ordinary skill in the art in view of the disclosure herein that the systems and methods disclosed herein can be similarly implemented with a tractor/truck 100 towing multiple trailers. As described in more detail below, the rear-facing radar subsystem 200, removably and adjustably attached to the rear of the tractor/truck 100, can emit electromagnetic waves rearward from the back of the tractor/truck 100 and underneath the trailer 110 being towed by the tractor/truck 100. The area between the lower surface of the trailer 110 and the ground underneath the trailer 110 acts as a wave guide to enable the electromagnetic waves to propagate and travel from the rear of the tractor/truck 100 to the rear end of the trailer 110 and beyond. These electromagnetic waves can travel in the wave guide underneath the trailer 110 and reflect off objects 120 (e.g., following vehicles) behind the trailer 110. The reflected electromagnetic waves can travel back through the wave guide underneath the trailer 110 and get received by the rear-facing radar subsystem 200 on the tractor/truck 100. Different types of radar devices have different performance characteristics when penetrating through the wave guide underneath the trailer 110. Particular radar devices available from various manufacturers can penetrate and propagate farther, while other radar devices can output more object detections. It will be apparent to those of ordinary skill in the art in view of the disclosure herein that any of these types of radar devices can be used as the rear-facing radar subsystem 200 as disclosed herein.

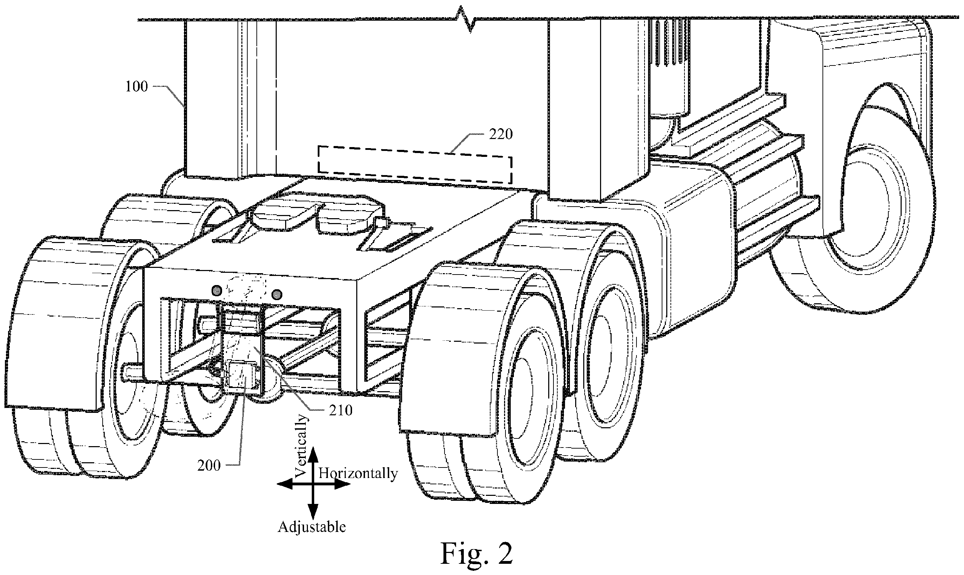

Fig. 2 illustrates a rear perspective view of a tractor/truck 100 configured with a rear-facing radar subsystem 200 according to an example embodiment. As shown for the example embodiment, the rear-facing radar subsystem 200 can be removably and adjustably installed at the rear end of the tractor/truck 100 and close to, and typically behind, the tractor/truck's fifth wheel coupling. The electromagnetic wave emitter of the rear-facing radar subsystem 200 can be removably and adjustably installed at the rear end of the tractor/truck 100 using an adjustable mounting bracket 210. The adjustable mounting bracket 210 is configured to enable the radar's electromagnetic wave emitter to be adjustable both vertically and horizontally. The adjustable mounting bracket 210 can provide a slide mounting to enable vertical adjustment of the radar's electromagnetic wave emitter. Multiple bracket mounting holes can be provided in the rear frame of the tractor/truck 100 to enable horizontal adjustment of the mounting bracket 210 and the radar's electromagnetic wave emitter mounted thereto. The adjustable mounting bracket 210 can also provide a hitch pin for removable attachment of the mounting bracket 210 to the rear frame of the tractor/truck 100. The rear-facing radar subsystem 200 can be removably attached to the adjustable mounting bracket 210 with bolts or screws. The optimization of the mounting bracket 210 location can depend on the performance of the radar unit 200 for rear-facing detections. In general, two parameters of the radar unit 200 placement can be adjusted and optimized: 1) the height of the radar unit 200 installation, optimized by ground reflection suppression (vertical adjustment); and 2) the longitudinal translation of the radar unit 200 placement, optimized by the performance of the radar unit 200 and the mechanical protection of the radar unit 200 from ground debris (horizontal adjustment). It will be apparent to those of ordinary skill in the art in view of the disclosure herein that alternative means for implementing an adjustable mounting bracket 210 are possible. The electrical and data connections from the rear-facing radar subsystem 200 can be routed to a vehicle control subsystem 220 installed in the tractor/truck 100. Once installed, the rear-facing radar subsystem 200 can be energized and initialized for electromagnetic wave emission and object detection. The rear-facing radar subsystem 200 can be in data communication with the vehicle control subsystem 220 via a wired or wireless data connection.

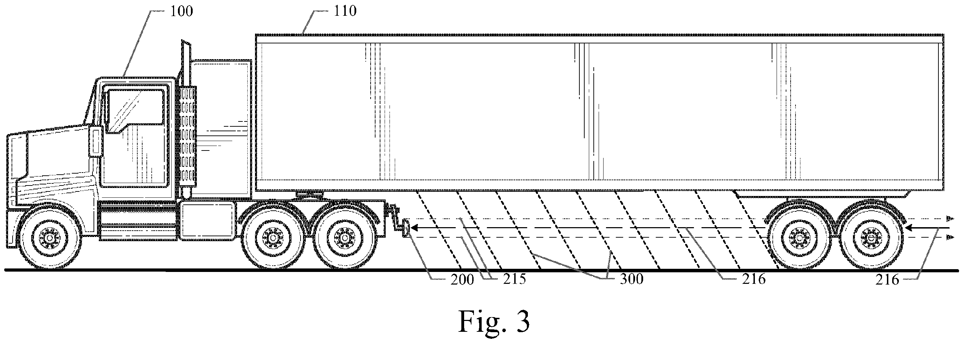

Fig. 3 illustrates a side view of a tractor/truck 100 towing an attached trailer 110, the tractor/truck 100 being configured with a rear-facing radar subsystem 200 according to an example embodiment, wherein the bottom surface of the trailer 110 and the ground below the trailer 110 create a wave guide 300 through which the radar electromagnetic waves 215 propagate and travel. Once the rear-facing radar subsystem 200 is energized and initialized for electromagnetic wave 215 emission, the rear-facing radar subsystem 200 can emit electromagnetic waves 215 rearward from the back of the tractor/truck 100 and underneath the trailer 110 being towed by the tractor/truck 100. The area between the lower surface of the trailer 110 and the ground underneath the trailer 110 acts as a wave guide 300 to enable the electromagnetic waves 215 to propagate and travel from the rear of the tractor/truck 100 to the rear end of the trailer 110 and beyond. The electromagnetic waves 215 emitted by the rear-facing radar subsystem 200 do not require an unobstructed line-of-sight view toward the rear of the trailer 110. These electromagnetic waves 215 can travel in the wave guide 300 underneath the trailer 110 and reflect off objects (e.g., following vehicles) behind the trailer 110. The reflected electromagnetic waves 216 can travel back through the wave guide 300 underneath the trailer 110 and get received by the rear-facing radar subsystem 200 on the tractor/truck 100. The rear-facing radar subsystem 200 can be configured to filter out any erroneous electromagnetic waves that are reflected off of the fixed structures underneath the trailer 110. Moreover, the filtering logic of the rear-facing radar subsystem 200 is further configured to account for tractor/truck 100 motion as well. For example, when the tractor/truck 100 is making a sharp turn, the filtering logic of the rear-facing radar subsystem 200 is further configured to change the filtering area accordingly, because the trailer(s) 110 can be moving in a different direction. In a particular embodiment, the filtering of the radar unit 200 wave returns can be implemented by setting up a baseline radar wave return profile through off-line empirical testing of various types of trailers 110. Then, during operational use of the rear-facing radar subsystem 200 in an actual driving scenario, the baseline radar wave return profile can be substracted from or compared with the wave returns received by the radar unit 200 during operational use. In alternative embodiments, the filtering process can consider the distance behind the trailer 110 and set up a range window. Any object detections falling outside of the range window can be removed or ignored. As a result, the erroneous electromagnetic waves reflected off of the fixed structures underneath the trailer 110 can be removed, identified, or otherwise filtered out. As with standard radar devices, the remaining reflected electromagnetic signals 216 can be used to detect any vehicles following the trailer 110 within the blind zone behind the trailer 110. The rear-facing radar subsystem 200 can generate object data representing objects detected in the reflected electromagnetic signals 216. This object data can be communicated to the vehicle control subsystem 220 via the wired or wireless data connection as described above.

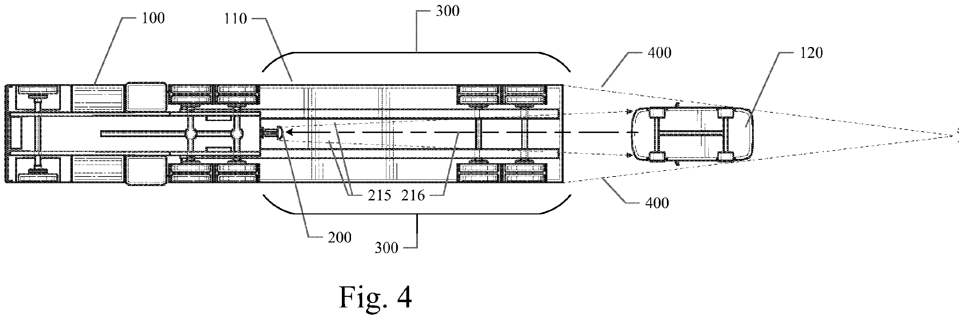

Fig. 4 illustrates a bottom view of a tractor/truck 100 towing an attached trailer 110 with a following vehicle 120 in the blind spot 400 behind the trailer 110, the tractor/truck 100 being configured with a rear-facing radar subsystem 200 according to an example embodiment, wherein the bottom surface of the trailer 110 and the ground below the trailer create a wave guide 300 through which the radar electromagnetic waves 215 propagate and travel to detect the following vehicle 120. As described above, the rear-facing radar subsystem 200, removably and adjustably installed at the rear end of the tractor/truck 100, can emit electromagnetic waves 215 rearward from the back of the tractor/truck 100 and underneath the trailer 110 being towed by the tractor/truck 100. The wave guide 300 enables the electromagnetic waves 215 to propagate and travel from the rear of the tractor/truck 100 to the rear end of the trailer 110 and beyond. The electromagnetic waves 215 emitted by the rear-facing radar subsystem 200 do not require an unobstructed line-of-sight view toward the rear of the trailer 110. These electromagnetic waves 215 can travel in the wave guide 300 underneath the trailer 110 and reflect off objects (e.g., following vehicles) behind the trailer 110. For example as shown in Fig. 4, the electromagnetic waves 215 emitted by the rear-facing radar subsystem 200 can expand and reflect off of a following vehicle 120 traveling in the blind spot 400 behind the trailer 110. The reflected electromagnetic waves 216 can travel back through the wave guide 300 underneath the trailer 110 and get received by the rear-facing radar subsystem 200 on the tractor/truck 100. As with standard radar devices, these reflected electromagnetic signals 216 can be used to detect any vehicles 1120 following the trailer 110 within the blind zone 400 behind the trailer 110. In an example embodiment, the rear-facing radar subsystem 200 can detect a following vehicle 120 with distance from 0 to 150 meters behind the trailer 110. The relative velocity of the following vehicle 120 can also be detected by the rear-facing radar subsystem 200. The rear-facing radar subsystem 200 can generate object data representing the presence, position, distance, and velocity of objects detected in the reflected electromagnetic signals 216.

In an example embodiment, the rear-facing radar subsystem 200 can also detect the size and shape of the objects detected in the reflected electromagnetic signals 216. This object data can be communicated to the vehicle control subsystem 220 via the wired or wireless data connection. The vehicle control subsystem 220 can use the object data representing detected following vehicles to adjust or implement a particular braking strategy, a lane change strategy, or other autonomous vehicle control strategy to avoid a collision or other conflict with the detected following vehicles (e.g. tailgaters). By using the disclosed tractor/truck-mounted, rear-facing radar subsystem 200, following vehicles 120 in the blind zone 400 behind a trailer 110 can be detected. Thus, a collision between the tractor/truck 100 with a trailer 110 and a following vehicle 120 can be avoided or mitigated using the object data representing detected following vehicles generated by the rear-facing radar subsystem 200. Using this detected object information, the vehicle control subsystem 220 in the tractor/truck 100 can command the tractor/truck 100 to brake, accelerate, implement a lane change, temporarily suppress or prevent a lane change, modify the vehicle trajectory, or otherwise control the tractor/truck 100 to take evasive action to avoid a collision with a following vehicle 120. As used herein, evasive action means any action performed or suppressed by the autonomous vehicle that is performed or suppressed as a reaction to the detection of an object (e.g., a vehicle) in the proximity of the autonomous vehicle, wherein the detection of the object represents a potential conflict with the current trajectory, velocity, or acceleration of the autonomous vehicle. In example embodiments, the vehicle control subsystem 220 in the tractor/truck 100 can command the tractor/truck 100 to take remedial action on detection of a following tailgater, the remedial action including: adjusting following distance based on the presence of a tailgater; adjusting lane change decisions based on tailgater predictions; changing to a lower speed (decelerate) to encourage a tailgater to pass; and changing to a faster speed (accelerate) to increase the distance from the tailgater. In general, by use of the disclosed tractor/truck-mounted, rear-facing radar subsystem 200, the detected object information provided by the rear-facing radar subsystem 200 as an input to the vehicle control subsystem 220 will result in safer and smoother manuevering of the autonomous vehicle. Depending on the driving scenario and regulations, the vehicle control commands issued by the vehicle control subsystem 220 in response to the detected object information can be selected, pre-configured, and optimized to minimize the potential of a collision, an abrupt swerving maneuver, or a hard stop.

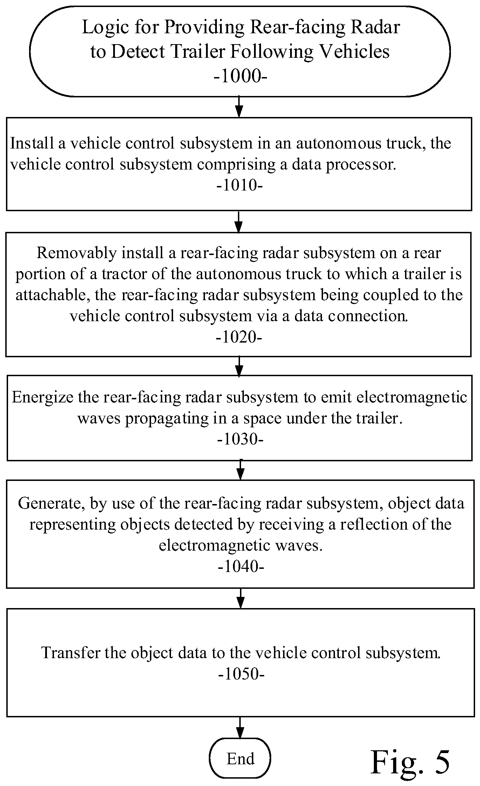

Referring now to Fig. 5, a process flow diagram illustrates an example embodiment of a method 1000 for providing a rear-facing radar subsystem to detect trailer following vehicles. The example embodiment can be configured to: install a vehicle control subsystem in an autonomous truck, the vehicle control subsystem comprising a data processor (processing block 1010); removably install a rear-facing radar subsystem on a rear portion of a tractor of the autonomous truck to which a trailer is attachable, the rear-facing radar subsystem being coupled to the vehicle control subsystem via a data connection (processing block 1020); energize the rear-facing radar subsystem to emit electromagnetic waves propagating in a space under the trailer (processing block 1030); generate, by use of the rear-facing radar subsystem, object data representing objects detected by receiving a reflection of the electromagnetic waves (processing block 1040); and transfer the object data to the vehicle control subsystem (processing block 1050).

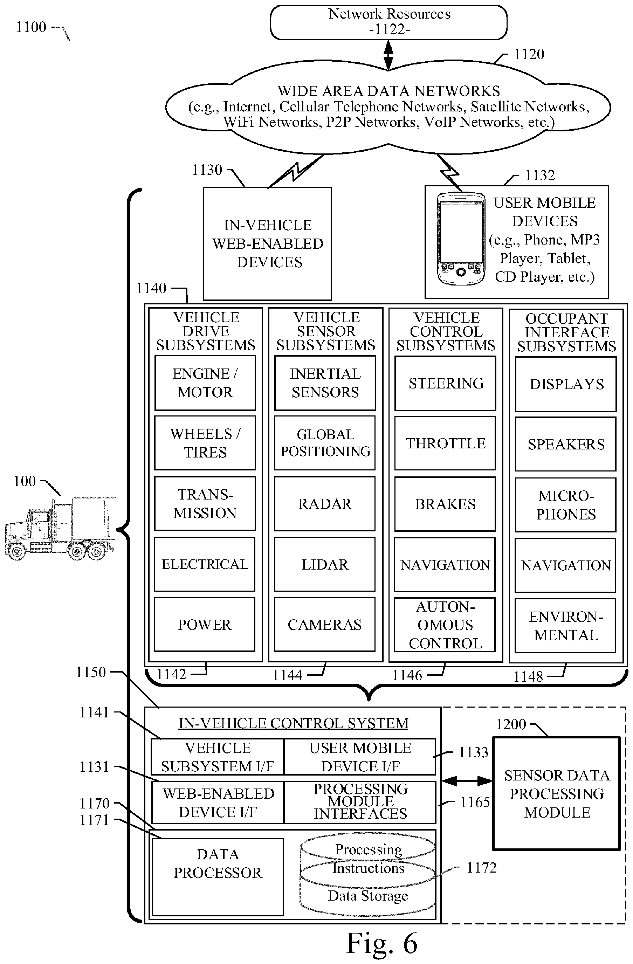

Referring now to Fig. 6, a block diagram illustrates an example ecosystem 1100 in which an in-vehicle control system 1150 and a sensor data processing module 1200 of an example embodiment can be implemented. The vehicle control subsystem 220 as described herein can correspond to the in-vehicle control system 1150 as described in more detail below. Ecosystem 1100 includes a variety of systems and components that can generate and/or deliver one or more sources of information/data and related services to the in-vehicle control system 1150 and the sensor data processing module 1200, which can be installed in the tractor/truck or other vehicle 100. For example, one or more cameras installed in or on the vehicle 100, as one of the devices of vehicle subsystems 1140, can generate image and timing data that can be received by the in-vehicle control system 1150. One or more of the cameras installed in or on the vehicle 100 can be equipped with various types of camera lenses (e.g., wide-angle or close-range lenses, medium-range lenses, and long-range lenses) to capture images of the environment around the vehicle 100. Additionally, the sensor data processing module 1200 can receive radar data from the rear-facing radar 200 installed to detect trailer following vehicles as described above. The in-vehicle control system 1150 and the sensor data processing module 1200 executing therein can receive this radar data as an input. As described in more detail herein, the sensor data processing module 1200 can process the radar data and enable the detection of trailer following vehicles (or other objects), which can be used by a vehicle control subsystem, as another one of the subsystems of vehicle subsystems 1140. The vehicle control subsystem, for example, can use the detection of trailer following vehicles to safely and efficiently navigate and control the vehicle 100 through a real world driving environment while avoiding obstacles and safely controlling the vehicle.

In an example embodiment as described herein, the in-vehicle control system 1150 can be in data communication with a plurality of vehicle subsystems 1140, all of which can be resident in the tractor/truck or other vehicle 100. A vehicle subsystem interface 1141 is provided to facilitate data communication between the in-vehicle control system 1150 and the plurality of vehicle subsystems 1140. The in-vehicle control system 1150 can be configured to include a data processor 1171 to execute the sensor data processing module 1200 for processing radar data received from one or more of the vehicle subsystems 1140. The data processor 1171 can be combined with a data storage device 1172 as part of a computing system 1170 in the in-vehicle control system 1150. The data storage device 1172 can be used to store data, processing parameters, radar parameters, terrain data, and data processing instructions. A processing module interface 1165 can be provided to facilitate data communications between the data processor 1171 and the sensor data processing module 1200. In various example embodiments, a plurality of processing modules, configured similarly to sensor data processing module 1200, can be provided for execution by data processor 1171. As shown by the dashed lines in Fig. 6, the sensor data processing module 1200 can be integrated into the in-vehicle control system 1150, optionally downloaded to the in-vehicle control system 1150, or deployed separately from the in-vehicle control system 1150.

The in-vehicle control system 1150 can be configured to receive or transmit data from/to a wide-area network 1120 and network resources 1122 connected thereto. An in-vehicle web-enabled device 1130 and/or a user mobile device 1132 can be used to communicate via network 1120. A web-enabled device interface 1131 can be used by the in-vehicle control system 1150 to facilitate data communication between the in-vehicle control system 1150 and the network 1120 via the in-vehicle web-enabled device 1130. Similarly, a user mobile device interface 1133 can be used by the in-vehicle control system 1150 to facilitate data communication between the in-vehicle control system 1150 and the network 1120 via the user mobile device 1132. In this manner, the in-vehicle control system 1150 can obtain real-time access to network resources 1122 via network 1120. The network resources 1122 can be used to obtain processing modules for execution by data processor 1171, data content to train internal neural networks, system parameters, or other data.

The ecosystem 1100 can include a wide area data network 1120. The network 1120 represents one or more conventional wide area data networks, such as the Internet, a cellular telephone network, satellite network, pager network, a wireless broadcast network, gaming network, WiFi network, peer-to-peer network, Voice over IP (VoIP) network, etc. One or more of these networks 1120 can be used to connect a user or client system with network resources 1122, such as websites, servers, central control sites, or the like. The network resources 1122 can generate and/or distribute data, which can be received in vehicle 100 via in-vehicle web-enabled devices 1130 or user mobile devices 1132. The network resources 1122 can also host network cloud services, which can support the functionality used to compute or assist in processing radar data input or radar data input analysis. Antennas can serve to connect the in-vehicle control system 1150 and the sensor data processing module 1200 with the data network 1120 via cellular, satellite, radio, or other conventional signal reception mechanisms. Such cellular data networks are currently available (e.g., Verizon^{™}, AT&T^{™}, T-Mobile^{™}, etc.). Such satellite-based data or content networks are also currently available (e.g., SiriusXM^{™}, HughesNet^{™}, etc.). The conventional broadcast networks, such as AM/FM radio networks, pager networks, UHF networks, gaming networks, WiFi networks, peer-to-peer networks, Voice over IP (VoIP) networks, and the like are also well-known. Thus, the in-vehicle control system 1150 and the sensor data processing module 1200 can receive web-based data or content via an in-vehicle web-enabled device interface 1131, which can be used to connect with the in-vehicle web-enabled device receiver 1130 and network 1120. In this manner, the in-vehicle control system 1150 and the sensor data processing module 1200 can support a variety of network-connectable in-vehicle devices and systems from within a vehicle 100.

As shown in Fig. 6, the in-vehicle control system 1150 and the sensor data processing module 1200 can also receive data, radar processing control parameters, and training content from user mobile devices 1132, which can be located inside or proximately to the vehicle 100. The user mobile devices 1132 can represent standard mobile devices, such as cellular phones, smartphones, personal digital assistants (PDA's), MP3 players, tablet computing devices (e.g., iPad^{™}), laptop computers, CD players, and other mobile devices, which can produce, receive, and/or deliver data, radar processing control parameters, and instructions for the in-vehicle control system 1150 and the sensor data processing module 1200. As shown in Fig. 6, the mobile devices 1132 can also be in data communication with the network cloud 1120. The mobile devices 1132 can source data and content from internal memory components of the mobile devices 1132 themselves or from network resources 1122 via network 1120. Additionally, mobile devices 1132 can themselves include a GPS data receiver, accelerometers, WiFi triangulation, or other geo-location sensors or components in the mobile device, which can be used to determine the real-time geo-location of the user (via the mobile device) at any moment in time. In any case, the in-vehicle control system 1150 and the sensor data processing module 1200 can receive data from the mobile devices 1132 as shown in Fig. 6.

Referring still to Fig. 6, the example embodiment of ecosystem 1100 can include vehicle operational subsystems 1140. For embodiments that are implemented in a vehicle 100, many standard vehicles include operational subsystems, such as electronic control units (ECUs), supporting monitoring/control subsystems for the engine, brakes, transmission, electrical system, emissions system, interior environment, and the like. For example, data signals communicated from the vehicle operational subsystems 1140 (e.g., ECUs of the vehicle 100) to the in-vehicle control system 1150 via vehicle subsystem interface 1141 may include information about the state of one or more of the components or subsystems of the vehicle 100. In particular, the data signals, which can be communicated from the vehicle operational subsystems 1140 to a Controller Area Network (CAN) bus of the vehicle 100, can be received and processed by the in-vehicle control system 1150 via vehicle subsystem interface 1141. Embodiments of the systems and methods described herein can be used with substantially any mechanized system that uses a CAN bus or similar data communications bus as defined herein, including, but not limited to, industrial equipment, boats, trucks, machinery, or automobiles; thus, the term "vehicle" as used herein can include any such mechanized systems. Embodiments of the systems and methods described herein can also be used with any systems employing some form of network data communications; however, such network communications are not required.

Referring still to Fig. 6, the example embodiment of ecosystem 1100, and the vehicle operational subsystems 1140 therein, can include a variety of vehicle subsystems in support of the operation of vehicle 100. In general, the vehicle 100 may take the form of a tractor/trailer, car, truck, or othr motorized vehicle, for example. Other supported vehicles are possible as well. The vehicle 100 may be configured to operate fully or partially in an autonomous mode. For example, the vehicle 100 may control itself while in the autonomous mode, and may be operable to determine a current state of the vehicle and its environment, determine a predicted behavior of at least one other vehicle in the environment, determine a confidence level that may correspond to a likelihood of the at least one other vehicle to perform the predicted behavior, and control the vehicle 100 based on the determined information. While in autonomous mode, the vehicle 100 may be configured to operate without human interaction.

The vehicle 100 may include various vehicle subsystems such as a vehicle drive subsystem 1142, vehicle sensor subsystem 1144, vehicle control subsystem 1146, and occupant interface subsystem 1148. As described above, the vehicle 100 may also include the in-vehicle control system 1150, the computing system 1170, and the sensor data processing module 1200. The vehicle 100 may include more or fewer subsystems and each subsystem could include multiple elements. Further, each of the subsystems and elements of vehicle 100 could be interconnected. Thus, one or more of the described functions of the vehicle 100 may be divided up into additional functional or physical components or combined into fewer functional or physical components. In some further examples, additional functional and physical components may be added to the examples illustrated by Fig. 6.

The vehicle drive subsystem 1142 may include components operable to provide powered motion for the vehicle 100. In an example embodiment, the vehicle drive subsystem 1142 may include an engine or motor, wheels/tires, a transmission, an electrical subsystem, and a power source. The engine or motor may be any combination of an internal combustion engine, an electric motor, steam engine, fuel cell engine, propane engine, or other types of engines or motors. In some example embodiments, the engine may be configured to convert a power source into mechanical energy. In some example embodiments, the vehicle drive subsystem 1142 may include multiple types of engines or motors. For instance, a gas-electric hybrid car could include a gasoline engine and an electric motor. Other examples are possible.

The wheels of the vehicle 100 may be standard tires. The wheels of the vehicle 100 may be configured in various formats, including a unicycle, bicycle, tricycle, or a four-wheel format, such as on a car or a truck, for example. Other wheel geometries are possible, such as those including six or more wheels. Any combination of the wheels of vehicle 100 may be operable to rotate differentially with respect to other wheels. The wheels may represent at least one wheel that is fixedly attached to the transmission and at least one tire coupled to a rim of the wheel that could make contact with the driving surface. The wheels may include a combination of metal and rubber, or another combination of materials. The transmission may include elements that are operable to transmit mechanical power from the engine to the wheels. For this purpose, the transmission could include a gearbox, a clutch, a differential, and drive shafts. The transmission may include other elements as well. The drive shafts may include one or more axles that could be coupled to one or more wheels. The electrical system may include elements that are operable to transfer and control electrical signals in the vehicle 100. These electrical signals can be used to activate lights, servos, electrical motors, and other electrically driven or controlled devices of the vehicle 100. The power source may represent a source of energy that may, in full or in part, power the engine or motor. That is, the engine or motor could be configured to convert the power source into mechanical energy. Examples of power sources include gasoline, diesel, other petroleum-based fuels, propane, other compressed gas-based fuels, ethanol, fuel cell, solar panels, batteries, and other sources of electrical power. The power source could additionally or alternatively include any combination of fuel tanks, batteries, capacitors, or flywheels. The power source may also provide energy for other subsystems of the vehicle 100.

The vehicle sensor subsystem 1144 may include a number of sensors configured to sense information about an environment or condition of the vehicle 100. For example, the vehicle sensor subsystem 1144 may include an inertial measurement unit (IMU), a Global Positioning System (GPS) transceiver, a radar unit, a laser range finder/LIDAR unit, and one or more cameras or image capture devices. The vehicle sensor subsystem 1144 may also include sensors configured to monitor internal systems of the vehicle 100 (e.g., an O2 monitor, a fuel gauge, an engine oil temperature). Other sensors are possible as well. One or more of the sensors included in the vehicle sensor subsystem 1144 may be configured to be actuated separately or collectively in order to modify a position, an orientation, or both, of the one or more sensors.

The IMU may include any combination of sensors (e.g., accelerometers and gyroscopes) configured to sense position and orientation changes of the vehicle 100 based on inertial acceleration. The GPS transceiver may be any sensor configured to estimate a geographic location of the vehicle 100. For this purpose, the GPS transceiver may include a receiver/transmitter operable to provide information regarding the position of the vehicle 100 with respect to the Earth. The radar unit may represent a system that utilizes electromagnetic or radio signals to sense objects within the local environment of the vehicle 100. In some embodiments, in addition to sensing the objects, the radar unit may additionally be configured to sense the speed and the heading of the objects proximate to the vehicle 100. As described above, the radar unit can include the rear-facing radar 200 to detect trailer following vehicles. The laser range finder or LIDAR unit may be any sensor configured to sense objects in the environment in which the vehicle 100 is located using lasers. In an example embodiment, the laser range finder/LIDAR unit may include one or more laser sources, a laser scanner, and one or more detectors, among other system components. The laser range finder/LIDAR unit could be configured to operate in a coherent (e.g., using heterodyne detection) or an incoherent detection mode. The cameras may include one or more devices configured to capture a plurality of images of the environment of the vehicle 100. The cameras may be still image cameras or motion video cameras.

The vehicle control system 1146 may be configured to control operation of the vehicle 100 and its components. Accordingly, the vehicle control system 1146 may include various elements such as a steering unit, a throttle, a brake unit, a navigation unit, and an autonomous control unit.

The steering unit may represent any combination of mechanisms that may be operable to adjust the heading of vehicle 100. The throttle may be configured to control, for instance, the operating speed of the engine and, in turn, control the speed of the vehicle 100. The brake unit can include any combination of mechanisms configured to decelerate the vehicle 100. The brake unit can use friction to slow the wheels in a standard manner. In other embodiments, the brake unit may convert the kinetic energy of the wheels to electric current. The brake unit may take other forms as well. The navigation unit may be any system configured to determine a driving path or route for the vehicle 100. The navigation unit may additionally be configured to update the driving path dynamically while the vehicle 100 is in operation. In some embodiments, the navigation unit may be configured to incorporate data from the sensor data processing module 1200, the GPS transceiver, and one or more predetermined maps so as to determine the driving path for the vehicle 100. The autonomous control unit may represent a control system configured to identify, evaluate, and avoid or otherwise negotiate potential obstacles in the environment of the vehicle 100. In general, the autonomous control unit may be configured to control the vehicle 100 for operation without a driver or to provide driver assistance in controlling the vehicle 100. In some embodiments, the autonomous control unit may be configured to incorporate data from the sensor data processing module 1200, the GPS transceiver, the radar unit, the LIDAR, the cameras, and other vehicle subsystems to determine the driving path or trajectory for the vehicle 100. The vehicle control system 1146 may additionally or alternatively include components other than those shown and described.

Occupant interface subsystems 1148 may be configured to allow interaction between the vehicle 100 and external sensors, other vehicles, other computer systems, and/or an occupant or user of vehicle 100. For example, the occupant interface subsystems 1148 may include standard visual display devices (e.g., plasma displays, liquid crystal displays (LCDs), touchscreen displays, heads-up displays, or the like), speakers or other audio output devices, microphones or other audio input devices, navigation interfaces, and interfaces for controlling the internal environment (e.g., temperature, fan, etc.) of the vehicle 100.

In an example embodiment, the occupant interface subsystems 1148 may provide, for instance, means for a user/occupant of the vehicle 100 to interact with the other vehicle subsystems. The visual display devices may provide information to a user of the vehicle 100. The user interface devices can also be operable to accept input from the user via a touchscreen. The touchscreen may be configured to sense at least one of a position and a movement of a user's finger via capacitive sensing, resistance sensing, or a surface acoustic wave process, among other possibilities. The touchscreen may be capable of sensing finger movement in a direction parallel or planar to the touchscreen surface, in a direction normal to the touchscreen surface, or both, and may also be capable of sensing a level of pressure applied to the touchscreen surface. The touchscreen may be formed of one or more translucent or transparent insulating layers and one or more translucent or transparent conducting layers. The touchscreen may take other forms as well.

In other instances, the occupant interface subsystems 1148 may provide means for the vehicle 100 to communicate with devices within its environment. The microphone may be configured to receive audio (e.g., a voice command or other audio input) from a user of the vehicle 100. Similarly, the speakers may be configured to output audio to a user of the vehicle 100. In one example embodiment, the occupant interface subsystems 1148 may be configured to wirelessly communicate with one or more devices directly or via a communication network. For example, a wireless communication system could use 3G cellular communication, such as CDMA, EVDO, GSM/GPRS, or 4G cellular communication, such as WiMAX or LTE. Alternatively, the wireless communication system may communicate with a wireless local area network (WLAN), for example, using WIFI^{®}. In some embodiments, the wireless communication system 1146 may communicate directly with a device, for example, using an infrared link, BLUETOOTH^{®}, or ZIGBEE^{®}. Other wireless protocols, such as various vehicular communication systems, are possible within the context of the disclosure. For example, the wireless communication system may include one or more dedicated short range communications (DSRC) devices that may include public or private data communications between vehicles and/or roadside stations.

Many or all of the functions of the vehicle 100 can be controlled by the computing system 1170. The computing system 1170 may include at least one data processor 1171 (which can include at least one microprocessor) that executes processing instructions stored in a non-transitory computer readable medium, such as the data storage device 1172. The computing system 1170 may also represent a plurality of computing devices that may serve to control individual components or subsystems of the vehicle 100 in a distributed fashion. In some embodiments, the data storage device 1172 may contain processing instructions (e.g., program logic) executable by the data processor 1171 to perform various functions of the vehicle 100, including those described herein in connection with the drawings. The data storage device 1172 may contain additional instructions as well, including instructions to transmit data to, receive data from, interact with, or control one or more of the vehicle drive subsystem 1142, the vehicle sensor subsystem 1144, the vehicle control subsystem 1146, and the occupant interface subsystems 1148.

In addition to the processing instructions, the data storage device 1172 may store data such as radar processing parameters, training data, roadway maps, and path information, among other information. Such information may be used by the vehicle 100 and the computing system 1170 during the operation of the vehicle 100 in the autonomous, semi-autonomous, and/or manual modes.

The vehicle 100 may include a user interface for providing information to or receiving input from a user or occupant of the vehicle 100. The user interface may control or enable control of the content and the layout of interactive images that may be displayed on a display device. Further, the user interface may include one or more input/output devices within the set of occupant interface subsystems 1148, such as the display device, the speakers, the microphones, or a wireless communication system.

The computing system 1170 may control the function of the vehicle 100 based on inputs received from various vehicle subsystems (e.g., the vehicle drive subsystem 1142, the vehicle sensor subsystem 1144, and the vehicle control subsystem 1146), as well as from the occupant interface subsystem 1148. For example, the computing system 1170 may use input from the vehicle control system 1146 in order to control the steering unit to avoid an obstacle detected by the vehicle sensor subsystem 1144 and the sensor data processing module 1200, move in a controlled manner, or follow a path or trajectory based on output generated by the in-vehicle control system, 1150 or the autonomous control module. In an example embodiment, the computing system 1170 can be operable to provide control over many aspects of the vehicle 100 and its subsystems.

Although Fig. 6 shows various components of vehicle 100, e.g., vehicle subsystems 1140, computing system 1170, data storage device 1172, and sensor data processing module 1200, as being integrated into the vehicle 100, one or more of these components could be mounted or associated separately from the vehicle 100. For example, data storage device 1172 could, in part or in full, exist separate from the vehicle 100. Thus, the vehicle 100 could be provided in the form of device elements that may be located separately or together. The device elements that make up vehicle 100 could be communicatively coupled together in a wired or wireless fashion.

Additionally, other data and/or content (denoted herein as ancillary data) can be obtained from local and/or remote sources by the in-vehicle control system 1150 as described above. The ancillary data can be used to augment, modify, or train the operation of the sensor data processing module 1200 based on a variety of factors including, the context in which the user is operating the vehicle (e.g., the location of the vehicle, the specified destination, direction of travel, speed, the time of day, the status of the vehicle, etc.), and a variety of other data obtainable from the variety of sources, local and remote, as described herein.

In a particular embodiment, the in-vehicle control system 1150 and the sensor data processing module 1200 can be implemented as in-vehicle components of vehicle 100. In various example embodiments, the in-vehicle control system 1150 and the sensor data processing module 1200 in data communication therewith can be implemented as integrated components or as separate components. In an example embodiment, the software components of the in-vehicle control system 1150 and/or the sensor data processing module 1200 can be dynamically upgraded, modified, and/or augmented by use of the data connection with the mobile devices 1132 and/or the network resources 1122 via network 1120. The in-vehicle control system 1150 can periodically query a mobile device 1132 or a network resource 1122 for updates or updates can be pushed to the in-vehicle control system 1150.

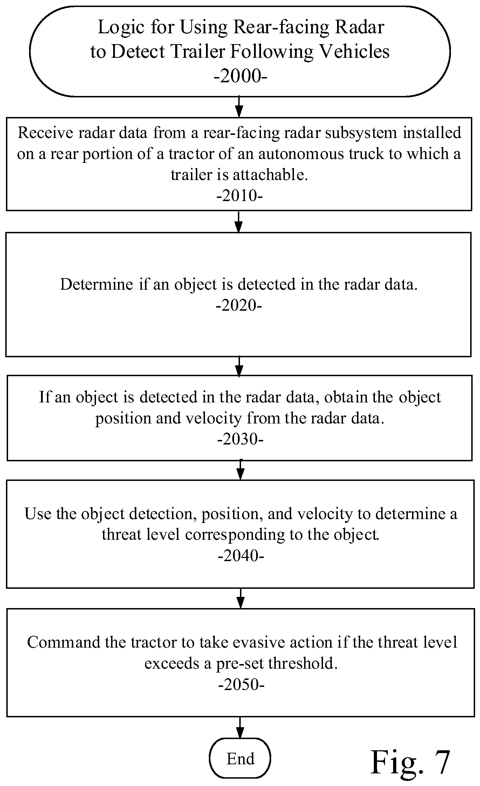

Referring now to Fig. 7, a process flow diagram illustrates an example embodiment of a method 2000 for using a rear-facing radar subsystem to detect trailer following vehicles and for using an in-vehicle control system to process the radar data and control the autonomous vehicle accordingly. The example embodiment can be configured to: receive radar data from a rear-facing radar subsystem installed on a rear portion of a tractor of an autonomous truck to which a trailer is attachable (processing block 2010); determine if an object is detected in the radar data (processing block 2020); if an object is detected in the radar data, obtain the object position and velocity from the radar data (processing block 2030); use the object detection, position, and velocity to determine a threat level corresponding to the object (processing block 2040); and command the tractor to take evasive action if the threat level exceeds a pre-set threshold (processing block 2050).

The various embodiments described herein provide several advantages over conventional systems. Firstly, as described above, the rear-facing radar subsystem 200 can be removably and adjustably attached to the tractor/truck 100 without any modification to the trailer 110 being towed by the tractor/truck 100. Secondly, the rear-facing radar subsystem 200 achieves better object detection performance relative to LIDAR or camera systems, which require an unobstructed line-of-sight view toward the rear of the trailer 110. Thirdly, without any modification to the trailer 110, the rear-facing radar subsystem 200 can take advantage of a wave guide 300 created between the bottom surface of the trailer 110 and the ground below the trailer 110 through which the radar electromagnetic waves 215 propagate and travel to detect the following vehicle 120. Fourthly, the rear-facing radar subsystem 200 enables the driver of the tractor/truck 100 or the vehicle control subsystem 220 in the tractor/truck 100 to be aware of the presence, position, distance, velocity, shape, and size of detected objects (e.g., vehicles) following the trailer 110. This awareness of following vehicles enables the driver or vehicle control subsystem 220 to take appropriate action to avoid conflicts with the following vehicles.

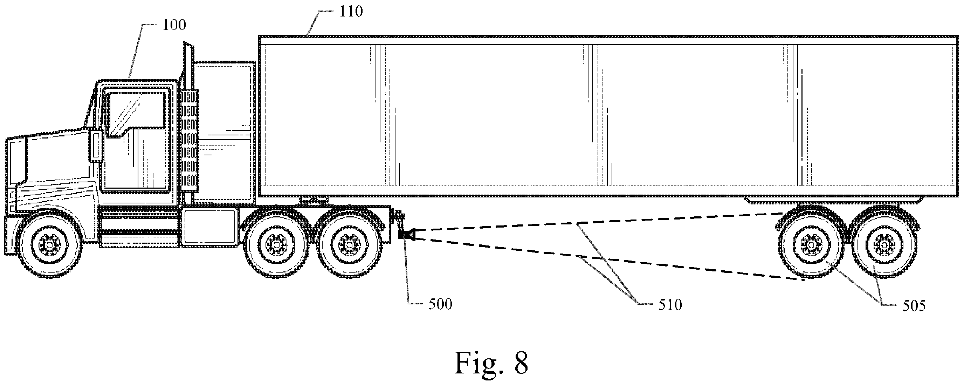

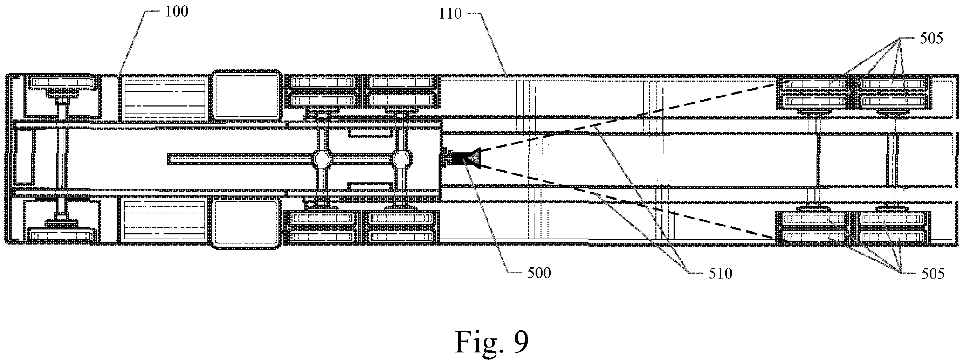

Fig. 8 illustrates another example embodiment showing a side view of a tractor/truck 100 towing an attached trailer 110, the tractor/truck 100 being configured with a rear-facing sensor subsystem 500 to detect the condition of the trailer wheels 505. Fig. 9 illustrates the example embodiment showing a bottom view of a tractor/truck 100 towing an attached trailer 110, the tractor/truck 100 being configured with a rear-facing sensor subsystem 500 to detect the condition of the trailer wheels 505. In this example embodiment as shown in Figs. 8 and 9, the rear-facing sensor subsystem 500 can be configured with: 1) a camera to capture images of the trailer wheels 505, 2) a thermal or infrared imaging camera or radiometric camera to detect a heat signature of the trailer wheels 505, and/or 3) an ultrasonic sensor to detect an acoustic signature of the trailer wheels 505.

As described in more detail below, the example embodiments can detect a variety of conditions related to the trailer wheels/tires, including trailer tire deflation, trailer tire blow-out, re-cap shredding, trailer tipping, excessive tire temperatures, fire, smoke, and noises from the trailer wheels indicative of potential problems. Because it may not be allowed to install any direct tire pressure measurement system (e.g., TPMS) on the trailer 110 or trailer tires 505 to measure or detect a tire deflation or blow-out, the example embodiments provide a capability to detect these trailer tire problems remotely from the rear of the tractor 100 towing the trailer 110.

According to Planck's law, any body, particularly a black body emits spectral radiance spontaneously and continuously. The emitted radiation is electromagnetic waves with various frequencies. The emitted radiation is most easily seen at the far end of the infrared spectral band as it is not abundant in the environment and is emitted by bodies proportionally to their temperature. Utilizing a radiometric camera, a camera with a temperature probe near the detector as a reference, as one form of a sensor on the rear-facing sensor subsystem 500, the example embodiment can detect accurate temperature measurements of the trailer tires. This type of radiometric camera can be directed at the trailer tires 505 remotely from the rear of the tractor 100 as shown in Figs. 8 and 9. and record the real-time video during autonomous driving truck operations. The camera not only provides monitoring images of trailer tires but also the absolute temperature values of the outer surfaces of the trailer tires 505.

Tire deflation will increase the friction between road surfaces and the tire itself. An improperly inflated tire with high speed rotation and increased surface friction generates excessive heat, which can cause the tire temperature to drastically increase. This condition may cause rubber degradation, fire, smoke, or tire blow-out resulting in tire damage and dangerous conditions for the truck and other proximate vehicles. By use of the trailer tire monitoring system as disclosed herein, dangerous trailer wheel conditions can be detected and accidents can be prevented. In some circumstances, trailer tire problems can be determined by the human truck driver through audible sounds or images seen in the truck's rear view mirror. However, when the truck is controlled by an autonomous driving system and no human driver is present, these dangerous trailer conditions cannot be detected using conventional methods. As such, it can be very dangerous for the autonomous truck itself and other proximate vehicles or pedestrians on the road if a trailer tire problem occurs and the autonomous truck still keeps driving.

Referring again to Figs. 8 and 9, an example embodiment includes a rear-facing sensor subsystem 500 removably installed close to the fifth wheel coupling on the tractor 100 and facing backwards toward the rear axle tires of the trailer 110. The rear-facing sensor subsystem 500 can be removably attached to the truck 100 using an adjustable mounting bracket 210, such as the mounting bracket 210 described above. In example embodiments as shown in Figs. 8 and 9, the rear-facing sensor subsystem 500 can be configured with: 1) a camera to capture images of the trailer wheels 505, 2) a thermal or infrared imaging camera or radiometric camera to detect a heat signature of the trailer wheels 505, and/or 3) an ultrasonic sensor to detect an acoustic signature of the trailer wheels 505. The angle of view 510 of the rear-facing sensor subsystem 500 can be configured as shown in Figs. 8 and 9 to capture and focus on the location of the trailer rear wheels. For the rear-facing sensor subsystem 500 that includes a camera, the rotation of the trailer wheels can be imaged over time by the camera in a tire video that captures image frames including tire pixel data. For the rear-facing sensor subsystem 500 that includes a thermal or infrared imaging camera or radiometric camera, each pixel of the captured image frames can be attached with an absolute temperature value corresponding to the heat signature of each pixel in the image data. All the tire images can be captured by the thermal camera of the rear-facing sensor subsystem 500. For the rear-facing sensor subsystem 500 that includes an ultrasonic sensor, an acoustic signature of the area within angle of view 510 near the trailer wheels 505 can be captured over time by the rear-facing sensor subsystem 500. Because the rear-facing sensor subsystem 500 is installed on the rear of the truck 100, the wheel images, measured heat signatures, and acoustic signatures of the trailer tires 505 can be captured remotely without any sensor or other device being attached directly to the trailer 110 and without any modification of the trailer 110.

Once the rear-facing sensor subsystem 500 captures the image data, heat signature, and/or acoustic signature of the trailer tires 505 over time, the captured data can be transferred to the vehicle control subsystem 220 via the wired or wireless data connection as described above. The vehicle control subsystem 220 can employ standard rule-based techniques and/or machine learning techniques to process the data received from the rear-facing sensor subsystem 500. For example, the vehicle control subsystem 220 can use the camera image data captured by the rear-facing sensor subsystem 500 to compare the images of the trailer tires 505 over time looking for differences or anomalies. These anomalies can include unexpected changes in the shape of the tires 505, pieces of tire being expelled from the wheel, changes in the position or tilting of the trailer caused by deflating tires, fire or flames, smoke, or the like. These images can be processed by a trained machine learning model or classifier that is trained with normal and abnormal trailer tire images. In this manner, the vehicle control subsystem 220 can use the camera image data captured by the rear-facing sensor subsystem 500 to detect potential problems with the trailer tires 505. Upon detection of these potential problems, the vehicle control subsystem 220 can notify a central monitoring station via a wireless network communication. Additionally, the vehicle control subsystem 220 can cause the truck 100 control systems to slow the speed of the truck 100, perform an emergency stop, or direct the truck 100 to pull over to the side of the road.

In another example, the vehicle control subsystem 220 can use the heat signature data captured by the rear-facing sensor subsystem 500 to compare the heat signature of the trailer tires 505 over time looking for differences or anomalies. Tire deflation or blow-outs can cause temperature rises, which can be captured on the thermal images obtained by the rear-facing sensor subsystem 500 and received by the vehicle control subsystem 220. The vehicle control subsystem 220 can use standard rule-based processes or machine learning techniques to process the heat signature data. These heat signature data can be processed by a trained machine learning model or classifier that is trained with normal and abnormal trailer tire heat signatures. The abnormal trailer tire heat signatures can be caused by a deflating tire, a blow-out, a shredded re-cap, excessive friction, fire or flames, smoke, or other dangerous tire condition. In this manner, the vehicle control subsystem 220 can use the heat signature data captured by the rear-facing sensor subsystem 500 to detect potential problems with the trailer tires 505.

To directly measure the temperature of the trailer wheels, a radiometric camera (e.g., a camera with a temperature reference at the detector) can be used as it provides pixel level temperature measurement and detection. This allows for the use of computer vision analysis processes to determine that a tire is in danger of blow-out or has blown out. The temperature sensor provides a reference for the detector; because, many infrared detectors, such as microbolometers or thermopiles, rely on pixel temperature to determine light intensity. Having a direct temperature measurement rather than a relative one is important for determining whether an event such as a tire blow-out has occurred and for determining the risk of such an event occurring.

Upon detection of these potential problems, the vehicle control subsystem 220 can notify a central monitoring station via a wireless network communication. Additionally, the vehicle control subsystem 220 can cause the truck 100 control systems to slow the speed of the truck 100, perform an emergency stop, or direct the truck 100 to pull over to the side of the road.

In another example, the vehicle control subsystem 220 can use the acoustic signature data captured by the rear-facing sensor subsystem 500 to compare the acoustic signature of the trailer tires over time looking for differences or anomalies. Tire deflation, re-cap shredding, blow-outs, or other abnormal conditions can cause distinctive noises, which can be captured as acoustic signature data by an ultrasonic sensor of the rear-facing sensor subsystem 500 and received by the vehicle control subsystem 220. The vehicle control subsystem 220 can use standard rule-based processes or machine learning techniques to process the acoustic signature data. These acoustic signature data can be processed by a trained machine learning model or classifier that is trained with normal and abnormal trailer tire acoustic signatures. Standard background noise can be filtered out. The abnormal trailer tire acoustic signatures can be caused by a deflating tire, a blow-out, a shredded re-cap, excessive friction, dragging material, or other dangerous tire or trailer condition. In this manner, the vehicle control subsystem 220 can use the acoustic signature data captured by the rear-facing sensor subsystem 500 to detect potential problems with the trailer or trailer tires. Upon detection of these potential problems, the vehicle control subsystem 220 can notify a central monitoring station via a wireless network communication. Additionally, the vehicle control subsystem 220 can cause the truck 100 control systems to slow the speed of the truck 100, perform an emergency stop, or direct the truck 100 to pull over to the side of the road.

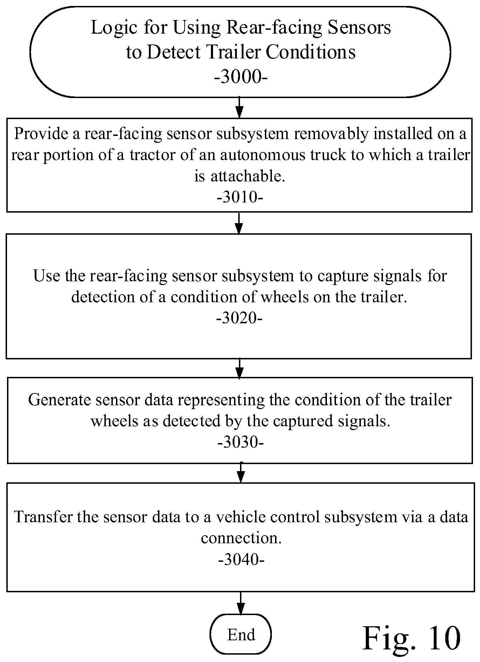

Referring now to Fig. 10, a process flow diagram illustrates an example embodiment of a method 3000 for using a rear-facing sensor subsystem to detect trailer conditions and for using a vehicle control subsystem to process the sensor data and control the autonomous vehicle accordingly. The example embodiment can be configured to: provide a rear-facing sensor subsystem installed on a rear portion of a tractor of an autonomous truck to which a trailer is attachable (processing block 3010); use the rear-facing sensor subsystem to capture signals for detection of a condition of wheels on the trailer (processing block 3020); generate sensor data representing the condition of the trailer wheels as detected by the captured signals (processing block 3030); and transfer the sensor data to a vehicle control subsystem via a data connection (processing block 3040).

This system and method of various example embodiments includes a remotely (truck) installed solution to detect the tire deflation, blow-outs, or other abnormal conditions using captured image analysis, thermal imaging, and/or acoustic data processing. The image analysis can use images captured by a rear-facing camera to scan for abnormal tire shapes or trailer tilting/tipping. The thermal imaging analysis can use thermal images to correlate trailer tire pressure to its temperature change and thereby detect abnormal conditions. Acoustic data processing can be used to detect abnormal sounds emanating from the trailer or trailer tires. In other embodiments as described in more detail below, combinations of sensor data (e.g., image data, thermal image data, acoustic data, radar data, LIDAR data, etc.) can be used together in combination to further refine the detection and classification of a particular abnormal event occurring at the trailer or trailer tires. The described embodiments can monitor the trailer condition or trailer tires in real-time and remotely, without any modification of the trailer. The earlier a tire deflation is detected for a fully loaded semi-truck, the quicker a tire blow-out and shutdown of the whole system operation can be prevented. Using the described embodiments, no extra hardware or cable routing is needed and the solution can be adapted to different trailers, with or without tire pressure monitoring previously installed on the trailer. This system is critical for driver-out autonomous driving trucks, and prevents tire deflation causing severe tire blow-out and further operation interruption. The described embodiments can reduce the risk of autonomous driving truck tire blow-out failures and thus reduce truck system operation downtime.

The systems and methods of various example embodiments as disclosed herein can also be used to detect a type or identify of a specific trailer being towed by the truck/tractor. For example, the particular shape or structure of a trailer as imaged by the sensor subsystem of the truck/tractor can be used to determine the type of the trailer. Additionally, bar codes, QR codes, or other identifying information applied to the trailer can be detected and used to identify a specific trailer being towed by the truck/tractor. As a result of the detection of a type or identity of a specific trailer, the vehicle control subsystem 220 can modify the operation of the autonomous truck in a manner consistent with the type or identity of the specific trailer (e.g, drive at slower speeds, turn less aggressively, brake less aggressively, etc.).

### Sensor Data Fusion and Processing

The example embodiments described herein can be configured with a variety of different types of sensors for capturing sensor or perception data in the proximity of an autonomously controlled truck. For example, various combinations of sensor data (e.g., image data, thermal image data, acoustic data, radar data, LIDAR data, etc.) can be used independently or together in combination to further refine the detection, classification, and remedial action to take in response to events occurring in the trailer or in the proximity of the autonomously controlled truck and trailer. Moreover, different instances of the same or different sensor devices can also be used alone or in various combinations as described in more detail below.

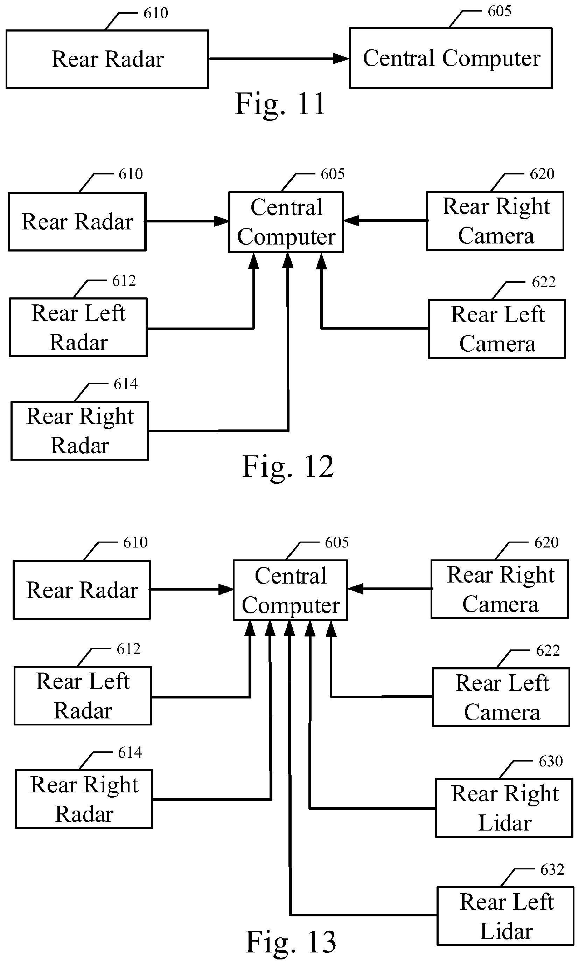

Referring now to Figs. 11 through 13, various configurations and combinations of sensors can be used in an autonomous truck to detect the presence, position, velocity, and status of objects in proximity to the autonomous truck, including the trailer being towed behind the truck or tractor. In example embodiments, a vehicle, such as a tractor of an autonomous truck to which a trailer is attachable, can be outfitted with a sensor subsystem. The sensor subsystem can include one or more cameras 620/622 (or other image capture devices), one or more radar units 610/612/614, and/or one or more LIDAR units 630/632. The sensor subsystem can be in data communication with a central computer 605 or computing system 1170 as described above. The sensor subsystem can collect multiple frames of images from the camera(s), multiple radar point clouds, and multiple LIDAR point clouds, respectively, at pre-determined times or cycle intervals (e.g., 50 milliseconds). In a sensor or perception data fusion phase, as described in detail below, trailer structures or types, trailer conditions, following vehicles, proximate objects, and other objects can be detected using the image data from the camera(s), data from the radar unit(s), and/or data from the LIDAR unit(s). Additionally, distance data, corresponding to the objects detected from the image data, can be obtained from the radar and LIDAR point clouds. Using both the 2D positions of objects detected in the image data and the estimates of relative distance of the objects using the radar and/or LIDAR data, the sensor data processing module of an example embodiment can determine the precise relative three dimensional (3D) position of objects relative to the autonomous vehicle. As multiple estimates of position are determined over time at a pre-determined sample rate or cycle time (e.g., 50 milliseconds), the sensor data processing module may also determine the estimated relative velocity and velocity vector of each object relative to the autonomous vehicle. With the assistance of a 3D tracking process, the system of an example embodiment can determine the relative 3D positions and velocities of objects using camera image data, radar data, and LIDAR data, even when intermittent, errant, or unstable, camera image data, radar data, and/or LIDAR data is received.

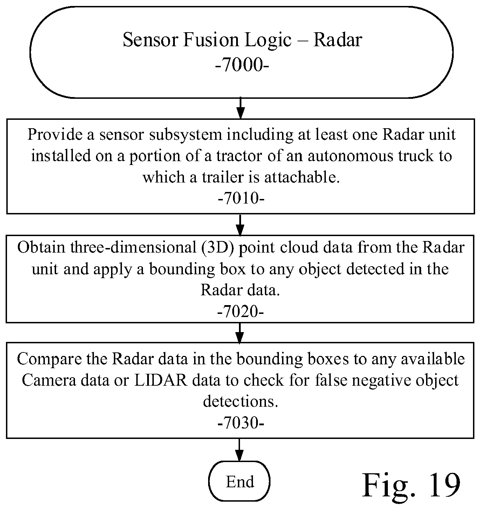

Referring now to Fig. 11, an example embodiment illustrates a sensor subsystem that includes a single rear radar unit 610 in data communication with a central computer 605. In this configuration, the rear-facing radar unit 610 can be removably installed on a rear portion of a tractor of the autonomous truck to which a trailer is attachable, the rear-facing radar unit 610 being coupled to the central computer 605 of a vehicle control subsystem via a data connection as described above. The rear-facing radar unit 610 can be configured to emit electromagnetic waves propagating in a space under the trailer, to generate object data representing objects detected by receiving a reflection of the electromagnetic waves, and to transfer the object data to the central computer 605 of the vehicle control subsystem. Additionally, as also described above, the rear-facing radar unit 610 can be configured to emit electromagnetic waves propagating in the space under the trailer, and to capture return signals to detect a structure and/or condition of the trailer or trailer tires, the rear-facing radar unit 610 further configured to generate sensor data representing the condition of the trailer as detected by the captured signals and to transfer the sensor data to the central computer 605 of the vehicle control subsystem. Moreover, as described below in connection with Fig. 19, the radar data can be fused or combined together with any other available data (e.g., camera image data or LIDAR point cloud data) to produce a more accurate and complete object detection result. In this manner, the example embodiment can use a single rear-facing radar unit 610 to detect trailer following vehicles, proximate objects, and trailer conditions.

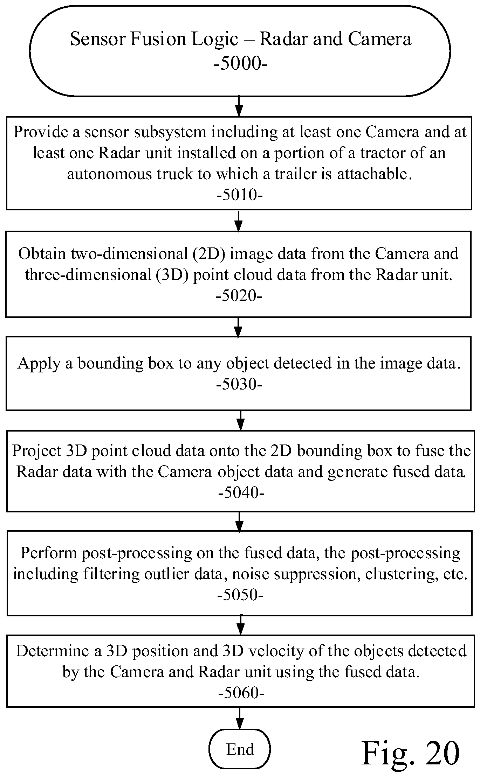

Referring now to Fig. 12, an example embodiment illustrates a sensor subsystem that includes a rear radar unit 610, a rear left radar unit 612, a rear right radar unit 614, a rear right camera 620, and a rear left camera 622, each in data communication with a central computer 605. In this configuration, the rear-facing radar unit 610 can be removably installed on a rear portion of a tractor of the autonomous truck to which a trailer is attachable. The rear left radar unit 612 and the rear right radar unit 614 can be installed on rear left and rear right sides of the tractor of the autonomous truck, respectively. The rear left radar unit 612 and the rear right radar unit 614 can be configured to emit radar signals and capture return signals to the sides of the tractor or trailer of the autonomous truck. Additionally, the example embodiment can include rear right camera 620 and rear left camera 622. The cameras 620/622 can be configured to capture image data to the sides of the tractor or trailer of the autonomous truck, the image data potentially including images of objects in the proximity of the tractor or trailer of the autonomous truck. The radar units 610/612/614 and cameras 620/622 can be coupled to the central computer 605 of a vehicle control subsystem via a data connection as described above. The radar units 610/612/614 can be configured to emit electromagnetic waves to the rear and sides of the tractor and trailer, to generate object data representing objects detected by receiving a reflection of the electromagnetic waves, and to transfer the object data to the central computer 605 of the vehicle control subsystem. Additionally, the cameras 620/622 can be configured to capture images and corresponding image data to the rear and sides of the tractor and trailer, to generate object data representing objects detected in the image data, and to transfer the object data to the central computer 605 of the vehicle control subsystem. Moreover, as described below in connection with Fig. 20, the radar data and the camera data can be fused or combined together to produce a more accurate and complete object detection result. In this manner, the example embodiment can use multiple radar units 610/612/614 and multiple cameras 620/622 to detect trailer following vehicles, proximate objects, and trailer conditions.

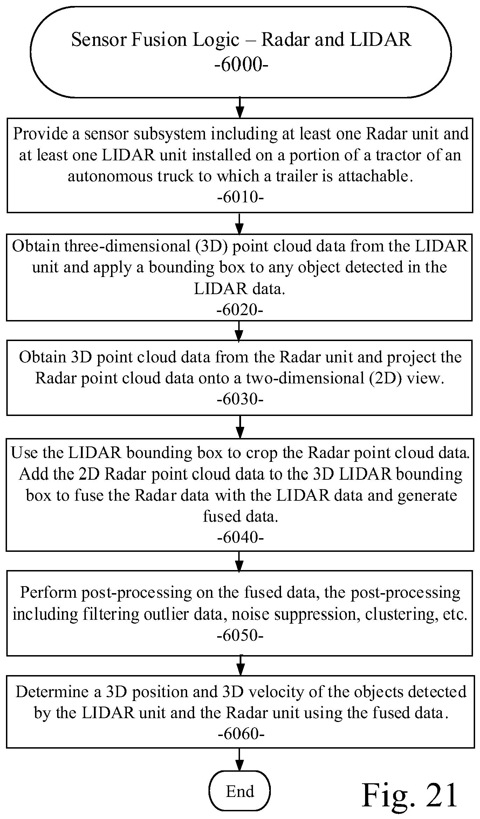

Referring now to Fig. 13, an example embodiment illustrates a sensor subsystem that includes a rear radar unit 610, a rear left radar unit 612, a rear right radar unit 614, a rear right camera 620, a rear left camera 622, a rear right LIDAR unit 630, a rear left LIDAR unit 632, each in data communication with a central computer 605. In this configuration, the rear-facing radar unit 610 can be removably installed on a rear portion of a tractor of the autonomous truck to which a trailer is attachable. The rear left radar unit 612 and the rear right radar unit 614 can be installed on rear left and rear right sides of the tractor of the autonomous truck, respectively. The rear left radar unit 612 and the rear right radar unit 614 can be configured to emit radar signals and capture return signals to the sides of the tractor or trailer of the autonomous truck. Additionally, the example embodiment can include rear right camera 620 and rear left camera 622. The cameras 620/622 can be configured to capture image data to the sides of the tractor or trailer of the autonomous truck, the image data potentially including images of objects in the proximity of the tractor or trailer of the autonomous truck. The example embodiment can also include rear right LIDAR unit 630 and rear left LIDAR unit 632. The LIDAR units 630/632 can be configured to emit laser signals and capture three-dimensional (3D) point clouds to the sides of the tractor or trailer of the autonomous truck. The LIDAR point clouds are beneficial to capture 3D depth data corresponding to objects in the proximity of the tractor or trailer. The radar units 610/612/614, cameras 620/622, and LIDAR units 630/632 can be coupled to the central computer 605 of a vehicle control subsystem via a data connection as described above. The radar units 610/612/614 can be configured to generate object data representing objects detected by receiving a reflection of the electromagnetic waves, and to transfer the object data to the central computer 605 of the vehicle control subsystem. The cameras 620/622 can be configured to capture two-dimensional (2D) images and corresponding image data to the rear and sides of the tractor and trailer, to generate object data representing objects detected in the image data, and to transfer the object data to the central computer 605 of the vehicle control subsystem. The LIDAR units 630/632 can be configured to capture three-dimensional (3D) point clouds to the sides of the tractor or trailer of the autonomous truck, to generate 3D object data representing objects detected in the point cloud data, and to transfer the 3D object data to the central computer 605 of the vehicle control subsystem. Moreover, as described below in connection with Fig. 21, the radar data and the LIDAR data can be fused or combined together to produce a more accurate and complete object detection result. In this manner, the example embodiment can use multiple radar units 610/612/614, multiple cameras 620/622, and multiple LIDAR units 630/632 to detect trailer following vehicles, proximate objects, and trailer conditions.

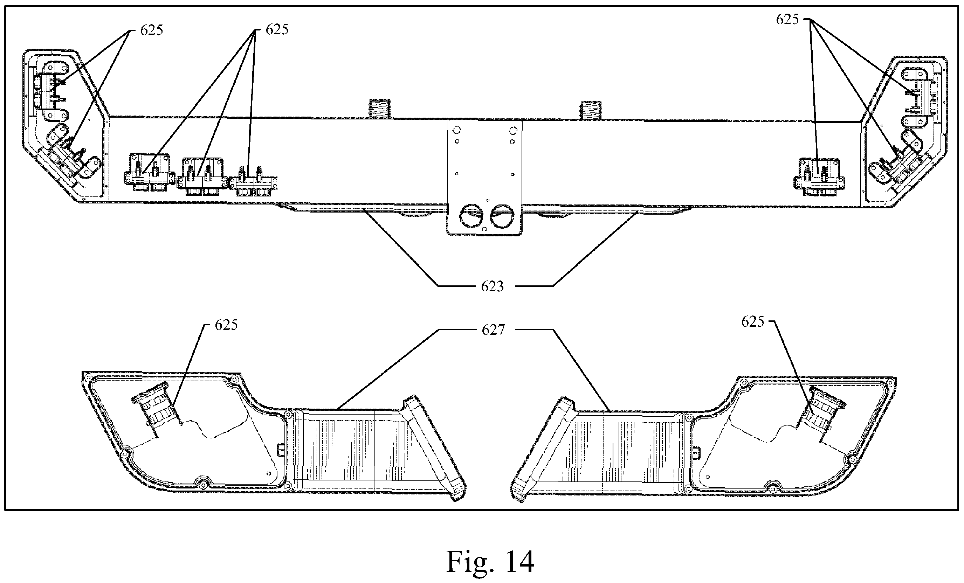

Fig. 14 illustrates an example embodiment of a camera subsystem integrated into a rack or mounting elements 623 for a truck or tractor. The rack 623 can be mounted to the top, front, or rear of a truck or tractor. The rack 623 can be configured to include a plurality of integrated cameras 625, all oriented to capture views, and related image data, all around the front, rear, and sides of the tractor. Fig. 14 also illustrates an example embodiment of a camera subsystem 625 integrated into a bumper or quarter panel 627 of a truck or tractor. As described above, the cameras 625 can be configured to capture two-dimensional (2D) images and corresponding image data to the front and sides of the tractor and trailer, to generate object data representing objects detected in the image data, and to transfer the object data to the central computer 605 of the vehicle control subsystem.

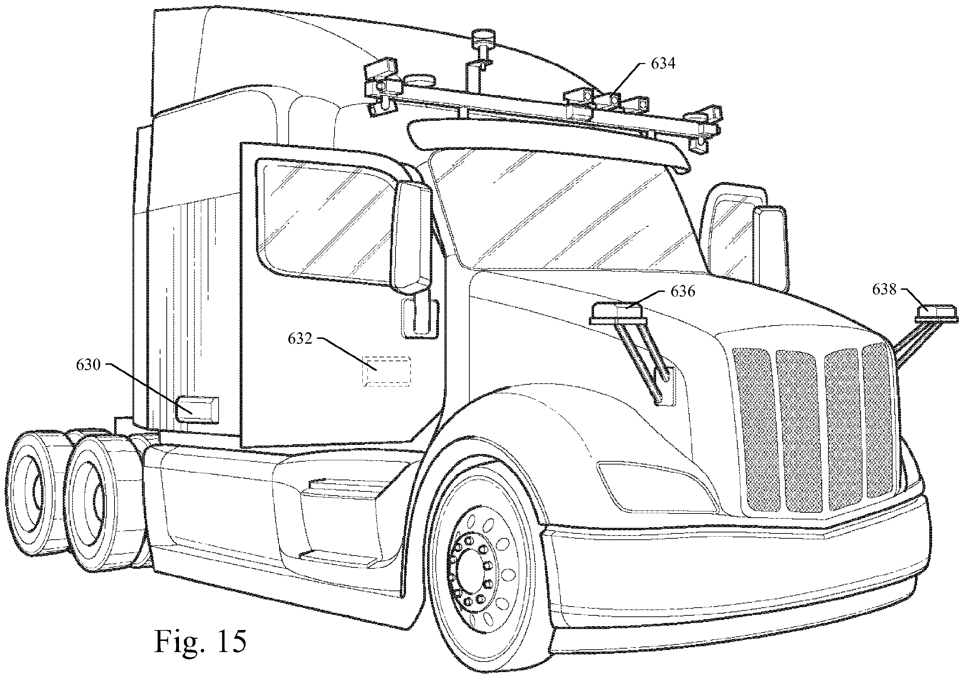

Fig. 15 illustrates an example embodiment of a LIDAR subsystem integrated into portions of a truck or tractor. The LIDAR subsystem can include a plurality of LIDAR units 630/632/643/636/638 mounted to the top, front, rear, and sides of a truck or tractor. The elements shown in dotted lines are elements hidden from the view shown in Fig. 15. The plurality of LIDAR units are all oriented to capture 3D point clouds all around the front, rear, and sides of the tractor. As described above, the LIDAR units can be configured to capture 3D point clouds all around the front, rear, and sides of the tractor or trailer of the autonomous truck, to generate 3D object data representing objects detected in the point cloud data, and to transfer the 3D object data to the central computer 605 of the vehicle control subsystem.

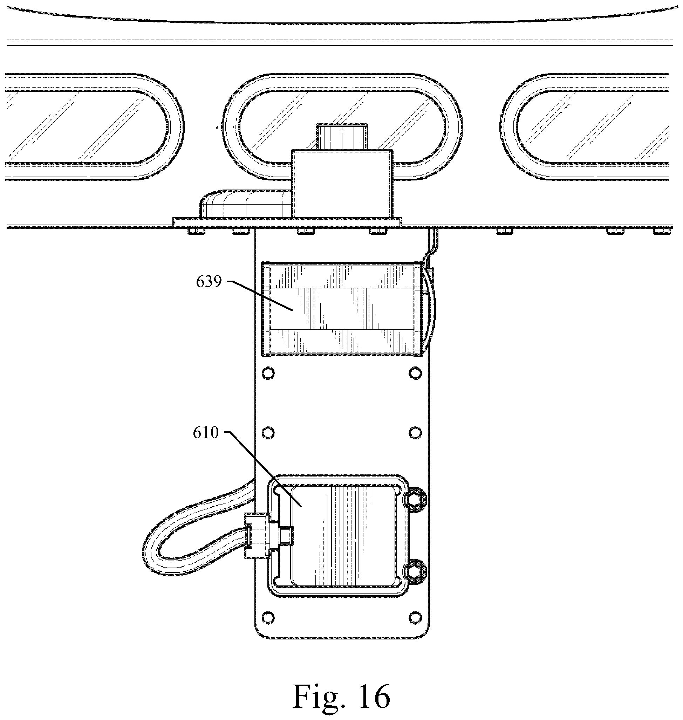

Fig. 16 illustrates an example embodiment of a sensor subsystem integrated into a rear mounting bracket of a truck or tractor. The rear-facing sensor subsystem can include a rear-facing radar unit 610 and a rear-facing LIDAR unit 639. The rear-facing radar unit 610 can be configured to emit electromagnetic waves to the rear of the tractor and trailer, to generate object data representing objects detected by receiving a reflection of the electromagnetic waves, and to transfer the object data to the central computer 605 of the vehicle control subsystem. The rear-facing LIDAR unit 639 can be configured to capture 3D point clouds to the rear of the tractor and trailer of the autonomous truck, to generate 3D object data representing objects detected in the point cloud data, and to transfer the 3D object data to the central computer 605 of the vehicle control subsystem. The rear mounting bracket with the integrated sensor subsystem can be attached to the rear of a truck or tractor, typically below and to the rear of the fifth wheel of the tractor. As described above, the integrated sensor subsystem can be in data communication with the central computer 605 of the vehicle control subsystem.

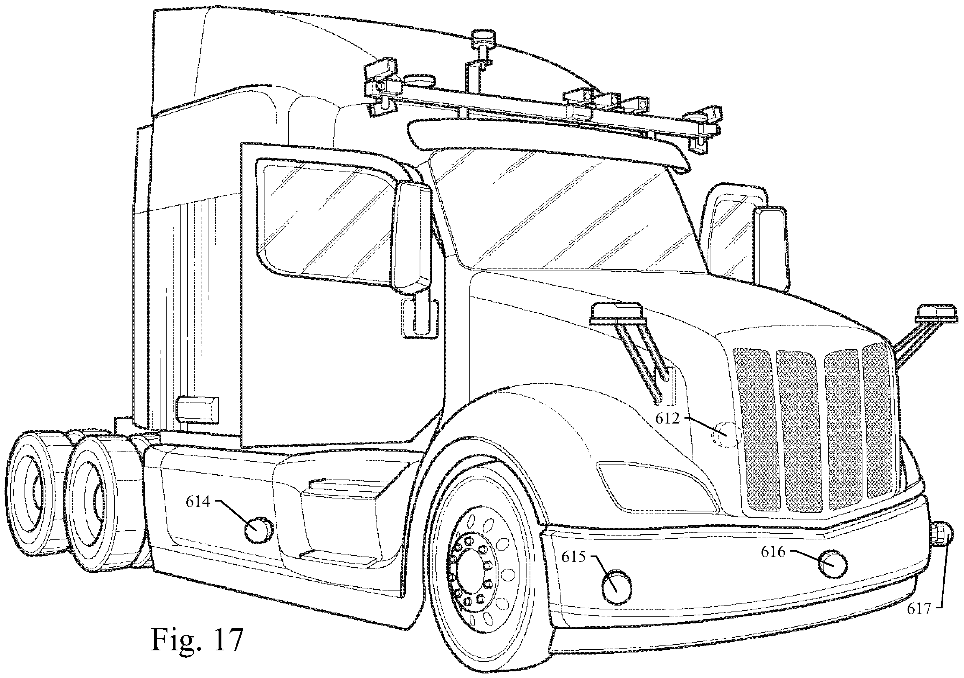

Fig. 17 illustrates an example embodiment of a radar subsystem integrated into portions of a truck or tractor. The radar subsystem can include a plurality of radar units 612/614/615/616/617 mounted to the top, front, rear, and sides of a truck or tractor. The elements shown in dotted lines are elements hidden from the view shown in Fig. 17. The plurality of radar units are all oriented to capture reflections all around the front, rear, and sides of the tractor. As described above, the radar units of the radar subsystem can be configured to emit radar signals and capture return signals all around the front, rear, and sides of the tractor or trailer of the autonomous truck, to generate object data representing objects detected by receiving a reflection of the electromagnetic waves, and to transfer the object data to the central computer 605 of the vehicle control subsystem.

The image data from the from the one or more cameras of the sensor subsystem as described above, represented as two-dimensional (2D) image data, can be processed by an image data processing module to identify proximate vehicles or other objects (e.g., moving vehicles, dynamic agents, other objects in the proximate vicinity of the autonomous truck or trailer), and the condition of the trailer behind the truck. For example, a process of semantic segmentation and/or object detection can be used to process the image data and identify objects in the images. The objects identified in the input image data can be designated by bounding boxes or other information useful for extracting object data from the image data. The object data extracted from the image data can be used to determine a 2D position or status of the object. The 2D position of the object can be used to determine if the object is within a pre-determined distance from the current position of the autonomous truck and thus, a proximate object. The 2D position of proximate objects identified in the image data can be provided as an input to sensor data fusion processes described in more detail below.

The radar data from the radar unit(s) and the LIDAR data from the LIDAR unit(s) can be represented as three-dimensional (3D) point clouds from the radar and LIDAR, respectively. The radar or LIDAR point clouds can be used to identify potential objects (e.g., moving vehicles, dynamic agents, other objects in the vicinity of the truck or trailer), or the condition of the trailer behind the truck. The 3D point clouds from the radar and/or LIDAR unit(s) also enable the ability to measure the distances from the autonomous truck to each of the potential proximate objects with a high degree of precision. The data related to the identified objects and corresponding distance measurements generated using the 3D point clouds from the radar and/or LIDAR unit(s) can be used to classify objects, determine position and velocity of objects, and determine a status of detected objects, such as a trailer behind the autonomous truck.

An object tracking module can be used for tracking the identified objects across a plurality of processing cycles or iterations of the collection of the sensor data from the cameras, the radar unit(s), and/or the LIDAR unit(s). The object tracking module can be configured to correlate the positions and velocities of the identified objects found in a previous processing cycle with the objects identified in the current processing cycle. In this manner, the movement and changes in the distance measurement for a particular object can be correlated across multiple cycles. An object missing from the current sensor data can still be checked for presence in a subsequent cycle in case the current sensor data is incomplete, errant, or otherwise compromised. In this manner, the object tracking module can track identified objects even when the sensor data is intermittent, errant, or unstable. Once the sensor data processing module generates the positions and velocities of detected objects for a current cycle, the positions and velocities of the detected objects can be saved as the position and velocity data from a previous cycle and used for a subsequent processing cycle. The data related to the identified and tracked objects and their corresponding distance measurements can be output by the sensor data processing module.

The sensor data processing module can be further used for correlating the objects identified from the image (camera) data with the objects identified and tracked from the radar and LIDAR point cloud data. Given the 2D position of objects identified from the image data and the distance measurements of the identified and tracked objects provided by the radar and LIDAR point cloud data, the sensor data processing module can match the positions of objects detected in the image data with objects detected in the radar and/or LIDAR data. As a result, the 2D positions of the detected objects can be matched with the corresponding distances of the detected objects, which can render the position of each detected object in three-dimensional (3D) space. Thus, the sensor data processing module can determine a three-dimensional (3D) position of each proximate object using a combination (or fusion) of the image data from the cameras and the distance data from the distance measuring devices, such as the radar unit(s) or the LIDAR unit(s). Additionally, the three-dimensional (3D) position of each detected object can be generated and tracked over a plurality of processing cycles. Newly identified objects that do not appear in the tracking data and hence do not correlate to any object in any previous cycle can be designated as a new object and the tracking of the new object can be initiated. The sensor data processing module can use the 3D positions and tracking data over multiple cycles to determine a velocity of each detected object. Therefore, the sensor data processing module can determine a velocity and velocity vector for each of the detected objects. The data corresponding to the 3D positions and velocities of each detected object can be provided as an output of the sensor data processing module as described herein.

Other subsystems of vehicle 100, as described above, can use the 3D positions and velocities of each detected object to perform a variety of additional processing functions. For example, the 3D positions and velocities of each detected object can be used by a trajectory planning module to generate a path for the vehicle 100 that does not intersect or interfere with the paths of the detected objects. Additionally, the 3D positions and velocities of each detected object can be used by a planning module to anticipate or infer future actions based on the behavior of detected objects and the context of the autonomous truck (e.g., vehicle 100). The future actions could include generating control signals to modify the operation of the vehicle 100, the generation of alerts to a driver of the vehicle 100, or other actions relative to the operation of the vehicle 100.

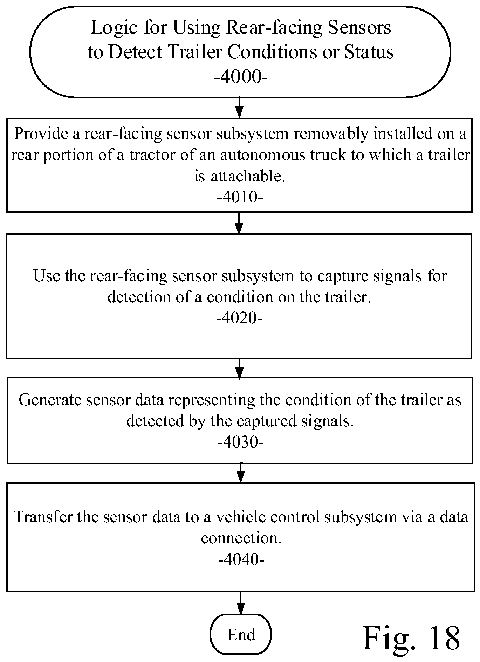

Referring now to Fig. 18, a process flow diagram illustrates an example embodiment of a method 4000 for using a rear-facing sensor subsystem to detect trailer conditions or trailer status and for using a vehicle control subsystem to process the sensor data and control the autonomous vehicle accordingly. The example embodiment can be configured to: provide a rear-facing sensor subsystem installed on a rear portion of a tractor of an autonomous truck to which a trailer is attachable (processing block 4010); use the rear-facing sensor subsystem to capture signals for detection of a condition on the trailer (processing block 4020); generate sensor data representing the condition of the trailer as detected by the captured signals (processing block 4030); and transfer the sensor data to a vehicle control subsystem via a data connection (processing block 4040).

Figs. 19 through 21 are process flow diagrams illustrating example embodiments of methods for fusing various forms of sensor data. Referring now to Fig. 19, a process flow diagram illustrates an example embodiment of a method 7000 for combining or fusing radar data with any other forms of sensor data. The example embodiment can be configured to: provide a sensor subsystem including at least one radar unit installed on a portion of a tractor of an autonomous truck to which a trailer is attachable (processing block 7010); obtain three-dimensional (3D) point cloud data from the radar unit and apply a bounding box to any object detected in the radar data (processing block 7020); and compare the radar data in the bounding boxes to any available camera data or LIDAR data to check for false negative object detections (processing block 7030).

Referring now to Fig. 20, a process flow diagram illustrates an example embodiment of a method 5000 for combining or fusing radar data with camera image data. The example embodiment can be configured to: provide a sensor subsystem including at least one camera and at least one radar unit installed on a portion of a tractor of an autonomous truck to which a trailer is attachable (processing block 5010); obtain two-dimensional (2D) image data from the camera and three-dimensional (3D) point cloud data from the radar unit (processing block 5020); apply a bounding box to any object detected in the image data (processing block 5030); project 3D point cloud data onto the 2D bounding box to fuse the radar data with the camera object data and generate fused data (processing block 5040); perform post-processing on the fused data, the post-processing including filtering outlier data, noise suppression, clustering, etc. (processing block 5050); and determine a 3D position and 3D velocity of the objects detected by the camera and radar unit using the fused data (processing block 5060).

Referring now to Fig. 21, a process flow diagram illustrates an example embodiment of a method 6000 for combining or fusing radar data with LIDAR data. The example embodiment can be configured to: provide a sensor subsystem including at least one radar unit and at least one LIDAR unit installed on a portion of a tractor of an autonomous truck to which a trailer is attachable (processing block 6010); obtain three-dimensional (3D) point cloud data from the LIDAR unit and apply a bounding box to any object detected in the LIDAR data (processing block 6020); obtain 3D point cloud data from the radar unit and project the radar point cloud data onto a two-dimensional (2D) view (processing block 6030); use the LIDAR bounding box to crop the radar point cloud data, add the 2D radar point cloud data to the 3D LIDAR bounding box to fuse the radar data with the LIDAR data and generate fused data (processing block 6040); perform post-processing on the fused data, the post-processing including filtering outlier data, noise suppression, clustering, etc. (processing block 6050); and determine a 3D position and 3D velocity of the objects detected by the LIDAR unit and the Radar unit using the fused data (processing block 6060).

Various example embodiments using the new systems, methods, and techniques are described in more detail herein. In various example embodiments as described herein, the example embodiments can include at least the following examples.

A system comprising: a vehicle control subsystem installed in an autonomous truck, the vehicle control subsystem comprising a data processor; and a truck-mounted sensor subsystem installed on a portion of a tractor of the autonomous truck to which a trailer is attachable, the truck-mounted sensor subsystem being coupled to the vehicle control subsystem via a data connection, wherein the truck-mounted sensor subsystem is configured to capture image data and sensor data from behind the tractor, and to generate object data representing objects detected in the image data and sensor data, and to transfer the object data to the vehicle control subsystem.

A system comprising: a vehicle control subsystem installed in an autonomous truck, the vehicle control subsystem comprising a data processor; and a truck-mounted sensor subsystem installed on a portion of a tractor of the autonomous truck to which a trailer is attachable, the truck-mounted sensor subsystem being coupled to the vehicle control subsystem via a data connection, wherein the truck-mounted sensor subsystem is configured to capture image data and sensor data from the trailer behind the tractor, and to generate trailer data representing a condition of the trailer as detected in the image data and sensor data, and to transfer the trailer data to the vehicle control subsystem.

A system comprising: a vehicle control subsystem installed in an autonomous truck, the vehicle control subsystem comprising a data processor; and a truck-mounted sensor subsystem installed on a portion of a tractor of the autonomous truck to which a trailer is attachable, the truck-mounted sensor subsystem being coupled to the vehicle control subsystem via a data connection, wherein the truck-mounted sensor subsystem is configured to capture image data and sensor data from behind the trailer, and to generate object data representing objects detected in the image data and sensor data, and to transfer the object data to the vehicle control subsystem.

A system comprising: a vehicle control subsystem installed in an autonomous truck, the vehicle control subsystem comprising a data processor; and a truck-mounted sensor subsystem installed on a portion of a tractor of the autonomous truck to which a trailer is attachable, the truck-mounted sensor subsystem being coupled to the vehicle control subsystem via a data connection, wherein the truck-mounted sensor subsystem is configured to capture image data and sensor data from behind the trailer, and to generate object data representing objects detected in the image data and sensor data, and to transfer the object data to the vehicle control subsystem, the vehicle control subsystem being configured to modify the operation of the tractor based on the object data captured from behind the trailer, the modification of the operation of the tractor including causing the tractor to reduce speed, increase speed, change lanes, illuminate hazard lights, or pull to the side of the roadway and stop.

A method comprising: installing a vehicle control subsystem in an autonomous truck, the vehicle control subsystem comprising a data processor; removably installing a truck-mounted sensor subsystem on a portion of a tractor of the autonomous truck to which a trailer is attachable, the truck-mounted sensor subsystem being coupled to the vehicle control subsystem via a data connection; energizing the truck-mounted sensor subsystem to emit electromagnetic waves propagating in a space under the trailer; generating, by use of the truck-mounted sensor subsystem, object data representing objects detected by receiving a reflection of the electromagnetic waves; transferring the object data to the vehicle control subsystem; and using the object data to command the autonomous vehicle to perform an action in response to the detection of the objects by the truck-mounted sensor subsystem.

The method may further comprise using at least one network-connected resource to obtain data for configuring the truck-mounted sensor subsystem.

The method may further comprise using the object data to obtain a position and velocity of at least one object detected to be following the trailer.

The method may further comprise using the object data, and the position and velocity of the at least one object, to determine a threat level corresponding to the at least one object.

The method may further comprise using the threat level corresponding to the at least one object to command the tractor to take evasive action if the threat level exceeds a pre-set threshold.

The truck-mounted sensor subsystem may be configured with a sensor of a type from the group consisting of: a camera, a radar unit, and a laser range finder/LIDAR unit.

The method further comprise fusing camera data with radar data.

The method further comprise fusing LIDAR data with radar data.

The action performed in response to the detection of the objects by the truck-mounted sensor subsystem may comprise adjusting the steering or braking of the tractor.

The vehicle control subsystem may be configured to use a trained machine learning model or classifier to process the sensor data.

The vehicle control subsystem may be configured to cause a tractor control system to modify operation of the tractor if an abnormal condition of the trailer wheels is detected.

A system comprising: a vehicle control subsystem installed in an autonomous truck, the vehicle control subsystem comprising a data processor; and a truck-mounted sensor subsystem installed on a portion of a tractor of the autonomous truck to which a trailer is attachable, the truck-mounted sensor subsystem being coupled to the vehicle control subsystem via a data connection, wherein the truck-mounted sensor subsystem is configured to capture images and emit signals in proximity to the trailer, to generate object data representing objects detected in the captured images or emitted signals, and to transfer the object data to the vehicle control subsystem.

The vehicle control subsystem may be configured to cause a tractor control system to modify operation of the tractor if an abnormal condition of the trailer wheels is detected.

The system may be configured to fuse data from the captured images with data from the emitted signals.

The system may be configured to detect a distance of a proximate object detected in the object data.

The truck-mounted sensor subsystem may detect a position and velocity of a following object.

The truck-mounted sensor subsystem may be further configured to emit electromagnetic waves propagating in a space under the trailer, wherein the space forms a wave guide between a lower surface of the trailer and the ground underneath the trailer.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A system comprising:
a vehicle control subsystem installed in an autonomous truck, the vehicle control subsystem comprising a data processor; and
a truck-mounted sensor subsystem installed on a portion of a tractor of the autonomous truck to which a trailer is attachable, the truck-mounted sensor subsystem being coupled to the vehicle control subsystem via a data connection, wherein the truck-mounted sensor subsystem is configured to emit electromagnetic waves propagating in a space under the trailer, to generate object data representing objects detected by receiving a reflection of the electromagnetic waves, and to transfer the object data to the vehicle control subsystem.

2. The system of claim 1 being configured to filter out erroneous electromagnetic waves that are reflected off of the fixed structures underneath the trailer.

3. The system of claim 1 or claim 2 wherein the truck-mounted sensor subsystem detects a following object with a distance from 0 to 150 meters behind the trailer.

4. The system of any of claims 1-3 wherein the truck-mounted sensor subsystem detects a presence, position, distance, and velocity of a following object.

5. The system of claims 1-4 further comprising an adjustable mounting bracket configured to be removably and adjustably installed at the rear portion of the tractor, the truck-mounted sensor subsystem being attached to the adjustable mounting bracket.

6. The system of claim 5 wherein the adjustable mounting bracket is adjustable both vertically and horizontally relative to the rear portion of the tractor.

7. A method comprising:
installing a vehicle control subsystem in an autonomous truck, the vehicle control subsystem comprising a data processor;
removably installing a truck-mounted sensor subsystem on a portion of a tractor of the autonomous truck to which a trailer is attachable, the truck-mounted sensor subsystem being coupled to the vehicle control subsystem via a data connection;
generating sensor data by capturing images and emitting signals in proximity to the trailer;
generating, by use of the truck-mounted sensor subsystem, object data representing objects detected in the captured images or emitted signals;
transferring the object data to the vehicle control subsystem; and
using the object data to command the autonomous vehicle to perform an action in response to the detection of the objects by the truck-mounted sensor subsystem.

8. The method of claim 7 further comprising using the object data to obtain a position and velocity of at least one object detected to be following the trailer.

9. The method of claim 8 further comprising using the object data, and the position and velocity of the at least one object, to determine a threat level corresponding to the at least one object.

10. The method of claim 9 further comprising using the threat level corresponding to the at least one object to command the tractor to take evasive action if the threat level exceeds a pre-set threshold.

11. The method of any of claims 7-10 further comprising using a different sensor on the tractor in combination with the truck-mounted sensor subsystem to detect objects following the trailer.

12. The method of claim 11 wherein the different sensor is a type of sensor from the group consisting of: a camera, a laser range finder/LIDAR unit, an inertial measurement unit (IMU), and a Global Positioning System (GPS) transceiver.

13. The method of any of claims 7-12 wherein the action performed in response to the detection of the objects by the truck-mounted sensor subsystem comprises adjusting the steering or braking of the tractor.

14. A computer program including instructions for performing the method according to one of the claims 7-13 when run on a data processing system.

15. A non-transitory machine-useable storage medium including the computer program of claim 14.
